# EUROPÄISCHE PATENTSCHRIFT

(11) **EP 3 350 243 B1**
(45) Veröffentlichungstag und Bekanntmachung des Hinweises auf die Patenterteilung: **14.08.2019**
(21) Anmeldenummer: 16763856.8
(22) Anmeldetag: 13.09.2016
(51) Int. Cl.: C08G 18/67, C08G 18/75, C08K 3/36, C08G 18/08, C09D 175/16, C08G 18/34, C08G 18/44

(54) **BESCHICHTETE FOLIEN MIT BESONDERS HOHER HYDROLYSEBESTÄNDIGKEIT UND HIERAUS HERGESTELLTE FORMKÖRPER**
COATED FILMS WITH PARTICULARLY HIGH HYDROLYSIS RESISTANCE AND SHAPED ARTICLES OBTAINED FROM SAME
FEUILLES RECOUVERTES PRESENTANT EN PARTICULIER UNE HAUTE RESISTANCE A L'HYDROLYSE ET CORPS DE FORMAGE FABRIQUE A PARTIR DE CELLE-CI

(30) Priorität: 16.09.2015 EP 15185390
(43) Veröffentlichungstag der Anmeldung: 25.07.2018
(73) Patentinhaber: Covestro Deutschland AG, 51373 Leverkusen (DE)
(72) Erfinder: LUDEWIG, Michael, 51519 Odenthal (DE); PETZOLDT, Joachim, 40789 Monheim (DE)
(74) Vertreter: Levpat
(86) Internationale Anmeldenummer: PCT/EP2016/071573
(87) Internationale Veröffentlichungsnummer: WO 2017/046091

(56) Entgegenhaltungen:
- EP-A1- 1 489 120
- DE-A1-102006 051 897
- DE-A1-102010 009 896
- Anonymous: "Radcure Coating Resins - Product Guide", Allnex , 2014, Seite 20, XP002751300, Gefunden im Internet: URL:http://allnex.com/brochures/268 [gefunden am 2015-11-24]

## Beschreibung

Die vorliegende Erfindung betrifft beschichtete Folien, umfassend eine Kunststofffolie und ein strahlungshärtbares wässriges Beschichtungsmittel, wobei das Beschichtungsmittel ein Polyurethan(meth)acrylat mit besonders hoher Hydrolysebeständigkeit umfasst. Sie betrifft weiterhin ein Verfahren zur Herstellung solcher Folien, die Verwendung solcher Folien zur Herstellung von Formkörpern, ein Verfahren zur Herstellung von Formkörpern mit einer strahlungsgehärteten Beschichtung sowie nach diesem Verfahren herstellbare Formkörper und die wässrigen strahlenhärtbaren Binde- und Beschichtungsmittel, die in der Beschichtung enthalten sind.

Die Härtung von aktivierten Doppelbindungen tragenden Beschichtungssystemen durch aktinische Strahlung ist bekannt und technisch etabliert. Unter aktinischer Strahlung wird elektromagnetische, ionisierende Strahlung verstanden, insbesondere Elektronenstrahlen, UV-Strahlen, sowie sichtbares Licht (Roche Lexikon Medizin, 4.Auflage; Urban & Fischer Verlag, München 1999). Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Wässrige, strahlungshärtbare Beschichtungssysteme auf Basis von Polyurethanpolymeren finden Anwendung in der Beschichtung unter anderem von Holz, Kunststoffen und Leder und zeichnen sich durch eine Vielzahl positiver Eigenschaften, wie guter Chemikalienbeständigkeit und mechanischer Stabilität aus. In der Regel enthalten solche Systeme wenig oder kein organisches Lösungsmittel.

Der Einsatz von wässrigen, strahlungshärtbaren Polyurethanpolymeren hat sich auch in der Kunststoff- und Folienbeschichtung etabliert. Dabei werden gute Oberflächeneigenschaften in der Regel durch eine hohe Vernetzungsdichte der Beschichtung erreicht. Hohe Vernetzungsdichten führen aber zu duromerem Verhalten mit nur geringen maximal möglichen Verstreckungsgraden, so dass die Beschichtung während eines Umformvorganges zur Rissbildung neigt.

Es wurden daher schon Verfahren vorgeschlagen (WO-A 00/63015, WO-A 2005/080484, WO-A 2005/099943, WO-A 2005118689, WO-A 2006/048109, WO-A 2008/052665), bei denen zunächst eine polymere Komponente auf eine verformbare Kunststofffolie aufgetragen wird, die in einem ersten Schritt blockfrei ausgehärtet wird. In einem zweiten Schritt wird die beschichtete Folie verformt, bevor die Beschichtung in einem dritten Schritt durch eine weitere Aushärtung mittels aktinischer Strahlung eine weitere Vernetzung erhält, die die guten Endeigenschaften der Beschichtung bewirkt.

Es hat sich dabei aber als schwierig erwiesen, Beschichtungen basierend auf wässrigen Beschichtungsmitteln zu entwickeln, die ihre hohen physikalischen Eigenschaften (Medienbeständigkeit und Kratzbeständigkeit), sowie ihre Haftung auf dem Substrat auch unter hydrolytischen Bedingungen bei erhöhten Temperaturen beibehalten. Solch eine Eigenschaft ist erwünscht, um ein Versagen einer Beschichtung auch im häufigen Körperkontakt oder unter tropischen Bedingungen zu vermeiden.

DE-A 102010009896 offenbart wässrige Polyurethandispersionen auf Basis von Epoxyacrylaten und ungesättigten Polyestern. Solche Systeme können durch ihren oxidativen Trocknungsmechanismus ebenfalls sehr gute Hydrolysebeständigkeiten erreichen. Dazu ist aber in der Regel eine längere Trocknungszeit von einigen Tagen und der Zusatz von Sikkativen nötig. Beides ist in der Folienbeschichtung aber nicht erwünscht.

DE-A 102006051897 offenbart bedruckbare Folien, ein Verfahren zur Bedruckung dieser Foien, die Härtung von mit Druckfarben aufgebrachten Schichten und aus diesen hergestellte Formkörper. Die in den Beispielen offenbarten Druckfarben als Beschichtungsmittel enthalten ebenfalls einen zweiten Vernetzungsmechanismus (NCO-OH-Reaktion). Dadurch ergibt sich eine nur geringe Topfzeit der Formulierung, die es erforderlich macht, die Druckfarbe unmittelbar vor der Applikation zu formulieren. Es ist aber wünschenswert, mit Bindemitteln zu arbeiten, die nahezu beliebig lagerfähig sind.

Grundsätzlich ist auch bekannt, dass Lacke basierend auf strahlungshärtbaren Polyurethan-Dispersionen, die nur aufgrund von Strahlungshärtung vernetzen und die Polycarbonatdiole als wesentliche Aufbaukomponenten enthalten, eine besonders hohe Hydrolyse- und Chemikalienresistenz erreichen können. So wird in der EP-A 1489120 eben ein solches System beschrieben, das allerdings eine haptische Oberfläche zum Hauptziel hat. Trotzdem ist auch eine hohe Chemikalienresistenz und eine hohe hydrolytische Stabilität erwähnt.

Eine gute Wetterstabilität und Chemikalienresistenz wird in der WO-A 2006/101433 für sehr ähnliche Produkte basierend auf Polycarbonatdiolen enthaltenden strahlenhärtbaren Polyurethan-Dispersionen angegeben. Es wurde gezeigt, dass die beanspruchten Produkte solchen mit Polyethern hinsichtlich der UV-Stabilität und solchen mit Polyestern hinsichtlich der hydrolytischen Stabilität überlegen sind, was wenig überraschend ist. Beide Anmeldungen liefern Beschichtungen mit durchaus guten Chemikalienresistenzen und hydrolytischen Stabilitäten, die allerdings für anspruchsvolle Anwendungen, wie beispielsweise für Folienbeschichtungen noch deutlich verbesserungswürdig sind.

Es war daher Aufgabe der vorliegenden Erfindung, beschichtete Folien bereitzustellen, deren Beschichtung nach physikalischer Trocknung blockfest und elastisch ist und nach anschließender Strahlungshärtung höchsten Ansprüchen hinsichtlich hydrolytischer Stabilität und Chemikalienresistenz genügt bei gleichzeitiger hervorragenden Haftung auf Kunststofffolien, bevorzugt auf Kunststofffolien basierend auf Polycarbonat und/oder Copolycarbonat.

Erfindungsgemäß vorgeschlagen wird daher eine beschichtete Folie umfassend eine Kunststofffolie und ein strahlungshärtbares wässriges Beschichtungsmittel, wobei das Beschichtungsmittel mindestens umfasst
a) ein Polyurethan(meth)acrylat, welches erhältlich ist aus der Reaktion einer Reaktionsmischung umfassend:
   A) ein oder mehrere Polyepoxy(meth)acrylate mit einer OH-Zahl von 20 bis 300 mg KOH/g Substanz, bevorzugt von 100 bis 280 mg KOH/g, besonders bevorzugt von 150 bis 250 mg KOH/g,
   B) gegebenenfalls von A) verschiedene Verbindungen mit mindestens einer gegenüber Isocyanat reaktiven Gruppe und mindestens einer strahlenhärtbaren Doppelbindung,
   C) ein oder mehrere lineare aliphatische Polycarbonatpolyole mit einer OH-Zahl von 25 bis 250 mg KOH/g Substanz, vorzugsweise 35 bis 160 mg KOH/g Substanz und besonders bevorzugt 50 bis 100 mg KOH/g Substanz,
   D) gegebenenfalls eine oder mehrere Verbindungen, die mindestens zwei gegenüber Isocyanat reaktiven Gruppen und ein Molekulargewicht von weniger als 300g/mol, bevorzugt von weniger als 200 g/mol, besonders bevorzugt von weniger als 150 g/mol aufweist,
   E) eine oder mehrere Verbindungen mit mindestens einer gegenüber Isocyanat reaktiven Gruppe und zusätzlich mindestens einer hydrophilierend wirkenden Gruppe,
   F) 4,4'-Diisocyanato-dicyclohexylmethan
   G) gegebenenfalls von A) bis F) verschiedene Verbindungen mit mindestens einer Aminfunktion,
   H) gegebenenfalls Reaktivverdünner mit mindestens einer radikalisch polymerisierbaren Gruppe,
   und
b) anorganische Nanopartikel mit einer mittleren Teilchengröße von ≥ 1 nm bis ≤ 200 nm, bevorzugt von ≥ 3 nm bis ≤ 50 nm, besonders bevorzugt von ≥ 5 nm bis ≤ 20 nm.

Die Komponente H) kann optional auch im Beschichtungsmittel enthalten sein.

"(Meth)acrylat" bezieht sich im Rahmen dieser Erfindung auf entsprechende Acrylat- oder Methacrylatfunktionen oder auf eine Mischung beider.

Die Bestimmung der OH-Zahl erfolgte gemäß DIN 53240.

In einer Ausführungsform der Erfindung umfasst das strahlungshärtbare wässrige Beschichtungsmittel folgende Komponenten:
a) 8,0 bis 65,0 Gew.-%, vorzugsweise 10,0 bis 40,0 Gew.-%, besonders bevorzugt 10,0 bis 20,0 Gew.-%,Polyurethan(meth)acrylat,
b) 5,0 bis 50,0 Gew.-%, vorzugsweise von 10,0 bis 40,0 Gew.-%, besonders bevorzugt von 15,0 bis 35,0 Gew.-% anorganische Nanopartikel,
c) 0 bis 57,0 Gew.-%, vorzugsweise 10,0 bis 57,0 Gew.-%, besonders bevorzugt 37,0 bis 47,0 Gew.-% Polyurethan(meth)acylat, verschieden von a),
d) 0 bis 30,0 Gew.-%, vorzugsweise 0 bis 20,0 Gew.-%, besonders bevorzugt 0 bis 15,0 Gew.-%, weitere Bindemittel oder Reaktivverdünner,
e) 0,1 bis 5,0 Gew.-%, vorzugsweise 0,2 bis 4,0 Gew.-%, besonders bevorzugt 0,5 bis 3,0 Gew.-%, Photoinitiator
f) 0 bis 15,0 Gew.-%, vorzugsweise 0 bis 10,0 Gew.-%, besonders bevorzugt 2,0 bis 10,0 Gew.-%, Hilfs- und Zusatzstoffe
g) 0 bis 10,0 Gew.-%, vorzugsweise 0 bis 5,0 Gew.-%, besonders bevorzugt 0 Gew.-% Vernetzer,
wobei die Mengenangaben auf getrockneten Film bezogen sind und die Summe der einzelnen Komponenten 100 ergeben muss.

Solche beschichtete Folien können beispielsweise zur Herstellung von Formkörpern eingesetzt werden, welche Strukturelemente mit sehr kleinen Krümmungsradien aufweisen. Die Beschichtungen weisen nach der Härtung mittels aktinischer Strahlung eine gute Abriebfestigkeit, gute Chemikalienbeständigkeit und eine hohe Hydrolysestabilität auf.

Die erfindungsgemäß einzusetzende Kunststofffolie besitzt vorteilhafterweise neben der geforderten allgemeinen Beständigkeit vor allem die nötige thermische Verformbarkeit. Prinzipiell geeignet sind daher insbesondere thermoplastische Polymere wie ABS, AMMA, ASA, CA, CAB, EP, UF, CF, MF, MPF, PF, PAN, PA, PE, HDPE, LDPE, LLDPE, PC, Co-PC, PET, PMMA, PP, PS, SB, PUR, PVC, RF, SAN, PBT, PPE, POM, PP-EPDM, und UP (Kurzbezeichnungen nach DIN 7728T1) sowie ihre Mischungen, weiterhin Verbundfolien aufgebaut aus zwei oder mehr Schichten dieser Kunststoffe. Allgemein können die erfindungsgemäß einzusetzenden Folien auch verstärkende Fasern oder Gewebe enthalten, sofern diese die erwünschte thermoplastische Verformung nicht beeinträchtigen.

Besonders geeignet sind thermoplastische Polyurethane, Polymethylmethacrylat (PMMA) sowie modifizierte Varianten von PMMA, Polycarbonat (PC), Copolycarbonat (Co-PC), Acrylnitril-Styrol-Acrylester-Copolymerisate (ASA), Acrylnitril-Butadien-StyrolCopolymerisate (ABS) und Polybutylenterephthalat/Polycarbonat.

Die Kunststofffolie oder auch Platte wird bevorzugt in einer Dicke von ≥ 50 µm bis ≤ 1500 µm, besonders bevorzugt von ≥ 100 µm bis ≤ 1000 µm und ganz besonders bevorzugt von ≥ 150 µm bis ≤ 750 µm verwendet. Zusätzlich kann das Material der Kunststofffolie Additive und/oder Prozesshilfsmittel zur Folienherstellung enthalten, wie zum Beispiel Stabilisatoren, Lichtschutzmittel, Weichmacher, Füllstoffe wie Fasern und Farbstoffe enthalten. Die zur Beschichtung vorgesehene sowie die andere Seite der Folie kann glatt sein oder eine Oberflächenstruktur aufweisen, wobei eine glatte Oberfläche der zu beschichtenden Seite bevorzugt ist.

In einer Ausführungsform kann die Kunststofffolie eine Polycarbonatfolie, Polybutylenterephthalat/Polycarbonat und/oder eine Copolycarbonatfolie mit einer Dicke von ≥ 50 µm bis ≤ 1500 µm, bevorzugt 100 µm bis ≤ 1000 µm, besonders bevorzugt ≥ 150 µm bis ≤ 750 µm sein, wobei die vorgenannten Additive und/oder Prozesshilfsmittel eingeschlossen sind.

Die erfindungsgemäße beschichtete Folie kann ein- oder beidseitig beschichtet sein, wobei das einseitige Beschichten bevorzugt wird. Im Falle einseitiger Beschichtung kann auf der Rückseite der Folie, also auf der Oberfläche, auf der das Beschichtungsmittel nicht aufgebracht wird, optional eine thermisch verformbare Klebstoffschicht aufgebracht sein. Hierzu eignen sich je nach Vorgehensweise bevorzugt Schmelzklebstoffe oder strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein sollten.

Optional kann die Kunststofffolie vor oder nach dem Auftragen des Beschichtungsmittels enthaltend mindestens ein Polyurethan(meth)acrylat a) mit einer oder mehreren Schichten lackiert oder bedruckt werden. Dieses kann auf der beschichteten oder auf der unbeschichteten Seite der Folie erfolgen. Die Schichten können farb- oder funktionsgebend sein, vollflächig oder nur teilweise, zum Beispiel als Druckbild, aufgetragen werden. Die verwendeten Lacke sollten thermoplastisch sein, um bei einer später erfolgenden Verformung nicht zu reißen. Druckfarben, wie sie für so genannte "In-Mould-Decoration"-Verfahren kommerziell erhältlich sind, können eingesetzt werden.

Die strahlenhärtbare Beschichtung der Kunststofffolie kann später die Oberfläche von Gebrauchsgegenständen darstellen. Erfindungsgemäß ist vorgesehen, dass die Beschichtung mindestens ein Polyurethan(meth)acrylat a) enthält.

Das wässrige strahlenhärtbare Beschichtungsmittel wird bevorzugt als 20 bis 60 %-ige, besonders bevorzugt als 30-58-%ige wässrige Dispersion eingesetzt. Wässrige Dispersionen bieten den Vorteil, auch besonders hochmolekulare Polyurethane in einem Beschichtungsmittel mit niedriger dynamischer Viskosität zu verarbeiten, da bei Dispersionen die Viskosität vom Molekulargewicht der Bestandteile der dispersen Phase unabhängig sind.

Im Folgenden werden die einzelnen Komponenten des Polyurethan(meth)acrylats a) näher beschrieben, welches in dem wässrigen strahlenhärtbaren Beschichtungsmittel enthalten ist.

Aufbaukomponente A) und gegebenenfalls Komponenten B) und (H) werden dabei in solchen Mengen eingesetzt, dass der Gehalt an strahlenhärtbaren Doppelbindungen in dem Polyurethan(meth)acrylat a) zwischen 0,5 und 6,0 mol/kg, bevorzugt zwischen 0,7 und 5,0 mol/kg, besonders bevorzugt zwischen 1,0 und 3,0 mol/kg nicht wässriger Bestandteile der Dispersion beträgt.

Komponente A) wird in Mengen von 5 bis 45 Gew.-%, bevorzugt 10 bis 40 Gew.-%, besonders bevorzugt 15 bis 30 Gew.-% eingesetzt, bezogen auf die Summe der Komponenten A) bis H).

Komponente B), sofern mitverwendet, wird in Mengen von 1 bis 30 Gew.-% eingesetzt, bezogen auf die Summe der Komponenten A) bis H). Eine Mitverwendung der Komponente B) ist nicht bevorzugt.

Komponente C) wird in Mengen von 15 bis 65 Gew.-%, bevorzugt 20 bis 60 Gew.-%, besonders bevorzugt 25 bis 55 Gew.-% eingesetzt, bezogen auf die Summe der Komponenten A) bis H).

Komponente D), sofern mitverwendet, wird in Mengen von 1 bis 10 Gew.-% eingesetzt, bezogen auf die Summe der Komponenten A) bis H).

Komponente E) wird in Mengen von 1 bis 20 Gew.-%, bevorzugt 1 bis 10 Gew.-%, besonders bevorzugt 1 bis 5 Gew.-% eingesetzt, bezogen auf die Summe der Komponenten A) bis H).

Komponente F) wird in Mengen von 10 bis 65 Gew.-%, bevorzugt 15 bis 50 Gew.-%, besonders bevorzugt 20 bis 30 Gew.-% eingesetzt, bezogen auf die Summe der Komponenten A) bis H).

Komponente G) wird, sofern mitverwendet, in Mengen von 1 bis 15 Gew.-%, bevorzugt 2 bis 10 Gew.-%, besonders bevorzugt 3 bis 7 Gew.-% eingesetzt, bezogen auf die Summe der Komponenten A) bis H).

Komponente H) wird, sofern mitverwendet, in Mengen von 1 bis 40 Gew.-%, bevorzugt 10 bis 30 Gew.-%, eingesetzt, bezogen auf die Summe der Komponenten A) bis H), wobei die Komponente H) optional auch dem Beschichtungsmittel zugesetzt werden kann.

Als Komponente A) geeignet sind die an sich bekannten hydroxylgruppenhaltigen Polyepoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g. Solche Verbindungen werden auf Seite 37 bis 56 in P. K. T. Oldring (Ed.), Chemistry & Technology of UV & EB Formulations For Coatings, Inks & Paints, Vol. 2, 1991, SITA Technology, London beschrieben. Aromatische, hydroxylgruppenhaltige Polyepoxy(meth)acrylate basieren auf Umsetzungsprodukten von Acrylsäure und / oder Methacrylsäure mit aromatischen oder aliphatischen Glycidylethern (Epoxiden), bevorzugt aromatische Gylcidylether von monomerem, oligomerem oder polymerem Bisphenol-A und/oder Bisphenol-F oder deren alkoxylierten Derivaten. Besonders bevorzugt als Komponente A) ist das Umsetzungsprodukt von Acrylsäure mit dem Glycidylether von Bisphenol-A.

Die unter Komponente A) aufgezählten Verbindungen können für sich alleine oder auch in Mischungen verwendet werden.

Optionale Komponente B) enthält eine oder mehrere Verbindungen ausgewählt aus der Gruppe bestehend aus Polyester(meth)acrylaten, Polyether(meth)acrylaten, Polyetherester(meth)acrylaten und ungesättigten Polyestern mit Allyletherstruktureinheiten mit einer OH-Zahl im Bereich von 15 bis 300 mg KOH/g Substanz und monohydroxyfunktionelle, (Meth)acrylatgruppen-haltige Alkohole.

Von den Polyester(meth)acrylaten werden als Komponente B) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate als Komponente B) können insgesamt 7 Gruppen von Monomerbestandteilen zur Anwendung kommen:
Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Zahlenmittel der Molmasse Mn im Bereich von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweite Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetra¬hydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind.

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate B) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe bestehend aus Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und/oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Zahlenmittel der Molmasse Mn im Bereich von 500 bis 1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2,1991, SITA Technology, London, beschrieben.

Ebenfalls geeignet als Komponente B) sind hydroxylgruppenhaltige Polyether(meth)acrylate, die aus der Umsetzung von Acrylsäure und / oder Methacrylsäure mit Polyethern hervorgehen, so z. B. Homo-, Co- oder Blockcopolymerisate von Ethylenoxid, Propylenoxid und / oder Tetrahydrofuran auf beliebigen hydroxy- und / oder aminfunktionellen Startermolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente B) sind monohydroxyfunktionelle, (Meth)acrylatgruppen-haltige Alkohole, wie beispielsweise 2-Hydroxyethyl(meth)acrylat, Caprolacton-verlängerte Modifikationen von 2-Hydroxyethyl(meth)acrylat wie Pemcure12A (Cognis, DE), 2-Hydroxypropyl(meth)acrylat, 4-Hydroxybutyl(meth)acrylat, 3 -Hydroxy-2,2-dimethylpropyl(meth)acrylat, die im Mittel monohydroxyfunktionellen Di-, Tri oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch die Umsetzungsprodukte von (Meth)acrylsäuren mit gegebenenfalls doppelbindungshaltigen, monomeren Epoxidverbindungen als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Bevorzugte ungesättigte Gruppen enthaltende Verbindungen sind ausgewählt aus der Gruppe der Polyester(meth)acrylate, Polyether(meth)acrylate, 2-Hydroxyethyl(meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Die unter Komponente B) aufgezählten Verbindungen können für sich alleine oder auch in Mischungen verwendet werden. Eine Verwendung der Komponente B) ist nicht bevorzugt.

Als Komponente C) werden Polycarbonatpolyole mit einer OH-Zahl von 25 bis 250 mg KOH/g Substanz, vorzugsweise 35 bis 160 und besonders bevorzugt 50 bis 100 mg KOH/g Substanz, verwendet.

Die Funktionalität der erfindungsgemäß verwendbaren Polycarbonatpolyole liegt in einer Ausführungsform zwischen 1,8 und 3,2, vorzugsweise zwischen 1,9 und 2,5 und besonders bevorzugt zwischen 1,95 und 2,1.

Die Funktionalität der Polycarbonatpolyole ergibt sich aus den zur Herstellung eingesetzten Polyolen und den dem Fachmann bekannten Verfahren zur Bestimmung der Abbruchreaktionen, z.B. über NMR-Spektroskopie.

Polycarbonatpolyole sind Polyester aus Kohlensäure und Polyolen, die durch Umesterung von Kohlensäurederivaten wie beispielsweise Diphenylcarbonat, Dimethylcarbonat oder Diethylcarbonat mit Polyolen hergestellt werden. Erfindungsgemäß sind die einsetzbaren Polycarbonatpolyole im Wesentlichen aus linearen, aliphatischen Diolen aufgebaut, wie beispielsweise 1,2-Ethandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecadiol. Vorzugsweise sind die erfindungsgemäß einsetzbaren Polycarbonatpolyole im Wesentlichen aus 1,4-Butandiol, 1,5-Pentandiol und/ oder 1,6-Hexandiol aufgebaut; besonders bevorzugt ist der Aufbau aus 1,6-Hexandiol.

Es können auch untergeordnete Mengen (bis zu 10 mol-% bezogen auf die linearen, aliphatischen Diole) aus anderen Polyolen zum Aufbau des Polycarbonatpolyols mitverwendet werden, beispielsweise 1,2-Propandiol, Neopentylglykol, 2-Ethyl-2-butylpropandiol, Trimethylpentandiol, 1,4-Cyclohexandimethanol, 1,2- und 1,4-Cyclohexandiol, hydriertes Bisphenol A (2,2-Bis(4-hydroxycyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und/oder Rizinusöl. Die Mitverwendung solcher Polyole ist allerdings nicht bevorzugt.

Die optionale Komponente D) enthält monomere Di- und/oder Triole jeweils mit einem Molekulargewicht von 32 bis 300 g/mol, wie z. B. Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und/oder Rizinusöl. Bevorzugt sind Neopentylglykol, 1,4-Butandiol, 1,4-Cyclohexandimethanol, 1,6-Hexandiol und/oder Trimethylolpropan.

Die Komponente E) umfasst Verbindungen mit mindestens einer gegenüber Isocyanat reaktiven Gruppe und zusätzlich mindestens einer hydrophilierend wirkenden Gruppe.

Zu den hydrophilierend wirkenden Gruppen gehören ionische Gruppen E1) und/oder die aus potentiell ionischen Gruppen E2) hervorgehenden (beispielsweise durch Salzbildung) ionischen Gruppen E1), die anionischer Natur E1.1) wie beispielsweise Sulfonium-, Phosphonium-, Carboxylat-, Sulfonat-, Phosphonat-Gruppen oder kationischer Natur E1.2) wie beispielsweise Ammonium-Gruppen sein können, potentiell ionische Gruppen E2), d.h. Gruppen, die beispielsweise durch Salzbildung in ionische Gruppen E1) überführt werden können und/oder nicht-ionische Gruppen E3) wie beispielsweise Polyethergruppen, die durch isocyanatreaktive Gruppen in die Makromoleküle eingebaut werden können. Bevorzugt geeignete isocyanatreaktive Gruppen sind Hydroxyl- und Aminogruppen.

Verbindungen enthaltend potentiell ionische Gruppen E2) umfassen Verbindungen mit potentiell anionischen Gruppen E2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen E2.2) wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthaltend potentiell anionischen Gruppen E2.1) sind ausgewählt aus der Gruppe bestehend aus Dimethylolpropionsäure, Dimethylolbuttersäure, Hydroxypivalinsäure, N-(2-Amino¬ethyl)-alanin, 2-(2-Amino-ethylamino)-ethansulfonsäure, Ethylendiamin-propyl- oder -butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan, IPDA) und Acrylsäure (EP-A 916 647, Beispiel 1), das Addukt von Natriumbisulfit an Buten-2-diol-1,4-Polyethersulfonat sowie das propoxylierte Addukt aus 2-Butendiol und NaHSO₃, wie in DE A 2 446 440 auf Seite 5-9, Formel I-III beschrieben.

Besonders bevorzugte Verbindungen enthaltend potentiell ionische Gruppen E2) sind Carboxylgruppen, Sulfonsäuregruppen und/oder tertiäre Aminogruppen enthaltende Verbindungen wie beispielsweise 2-(2-Amino-ethylamino-)ethansulfonsäure, 3-(Cyclohexylamino)propan-1-sulfonsäure, das Additionsprodukt von Isophorondiamin und Acrylsäure (EP 916 647 A1, Beispiel 1), Hydroxypivalinsäure, Dimethylolpropionsäure, Triethanolamin, Tripropanolamin, N-Methyldiethanolamin und/oder N,N-Dimethylethanolamin.

Ganz besonders bevorzugt enthält Komponente E) als Verbindungen mit potentiell ionischen Gruppen Hydroxypivalinsäure und/oder Dimethylolpropionsäure.

Geeignete nicht-ionisch hydrophilierend wirkende Gruppen E3) sind beispielsweise Polyalkylenoxidether, die mindestens eine Hydroxy- oder Aminogruppe, sowie eine oder mehrere Alkylenoxideinheiten, von denen wenigstens eine Ethylenoxideinheit ist, enthalten. Diese Polyalkylenoxidether sind in an sich bekannter Weise durch Alkoxylierung geeigneter Startermoleküle zugänglich.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3 Ethyl-3-hydroxymethyloxetan oder Tetrahydrofurfurylalkohol, Diethylenglykol-monoalkylether wie beispielsweise Diethylen-glykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Ebenfalls geeignet ist Trimethylolpropan, das nur an einer OH-Gruppe alkoxyliert wird. Bevorzugte Startermoleküle sind gesättigte Monoalkohole und Trimethylolpropan, das nur an einer OH-Gruppe alkoxyliert wird. Besonders bevorzugt wird Diethylenglykolmonobutylether als Startermolekül verwendet.

Für die Alkoxylierungsreaktion geeignete Alkylenoxide sind beispielsweise Ethylenoxid, 1-Butenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% Ethylenoxideinheiten umfassen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen. Ebenfalls bevorzugt sind Trimethylolpropan-gestartete Polyalkylenoxide mit einer OH-Funktionalität von 2, wie z. B. Tegomer® D 3403 (Evonik Industries AG, Essen, DE) und Ymer® N 120 (Perstorp AB, Schweden).

Die unter Komponente E2.1) genannten Säuren werden durch Umsetzung mit Neutralisationsmitteln, wie Triethylamin, Ethyldiisopropylamin, Dimethylcyclohexylamin, Dimethylethanolamin, N,N-Dimethylethylamin, Ammoniak, N-Ethylmorpholin, LiOH, NaOH und/oder KOH in die entsprechenden Salze überführt. Der Neutralisationsgrad liegt dabei bevorzugt zwischen 50 und 125 %. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisation über 100 %, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente E2.2) genannten Basen werden durch Umsetzung mit Neutralisationsmitteln, wie z. B. anorganische Säuren, wie beispielsweise Salzsäure, Phosphorsäure und/oder Schwefelsäure, und/oder organischen Säuren, wie beispielsweise Ameisensäure, Essigsäure, Milchsäure, Methan-, Ethan- und/oder p-Toluolsulfonsäure, in die entsprechenden Salze überführt. Der Neutralisationsgrad liegt dabei bevorzugt zwischen 50 und 125 %.

Die unter Komponente E) aufgeführten Verbindungen können auch in Mischungen verwendet werden.

Die ionische Hydrophilierung und die Kombination von ionischer und nicht-ionischer Hydrophilierung sind gegenüber der rein nicht-ionischen Hydrophilierung bevorzugt. Besonders bevorzugt ist die ionische Hydrophilierung.

Als Komponente F) wird 4,4'-Diisocyanato-dicyclohexylmethan verwendet.

Zur Erhöhung des Gewichtsmittel des Molekulargewichts M_{w} der Polyurethan(meth)acrylate a) können Mono- und Diamine und / oder mono- oder difunktionelle Aminoalkohole als optionale Komponente G) verwendet werden. Bevorzugte Diamine sind solche, die gegenüber den Isocyanatgruppen reaktiver sind als Wasser, da die Verlängerung des Polyurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-Phenylendiamin, 1,4-Phenylendiamin, Piperazin, 4,4'-Diphenylmethandiamin, aminofunktionelle Polyethylenoxide, aminofunktionelle Polypropylenoxide (bekannt unter dem Namen Jeffamin® D-Reihe (Huntsman Corp. Europe, Zavantem, Belgien) und Hydrazin. Ganz besonders bevorzugt ist Ethylendiamin.

Bevorzugte Monoamine sind ausgewählt aus der Gruppe von Butylamin, Ethylamin und Amine der Jeffamin® M-Reihe (Huntsman Corp. Europe, Zavantem, Belgien), aminofunktionelle Polyethylenoxide, aminofunktionelle Polypropylenoxide und / oder Aminoalkohole.

Die optionale Komponente H) sind Reaktivverdünner, unter denen Verbindungen zu verstehen sind, die mindestens eine radikalisch polymerisierbare Gruppe, bevorzugt Acrylat- und Methacrylatgruppen, und bevorzugt keine gegenüber Isocyanat- oder Hydroxygruppen reaktiven Gruppen enthalten.

Bevorzugte Verbindungen H) weisen 2 bis 6, besonders bevorzugt 4 bis 6 (Meth)acrylatgruppen auf. Besonders bevorzugte Verbindungen H) weisen einen Siedepunkt von mehr als 200 °C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), Tricyclodecandimethanol, Glycerin, Trimethylolethan, Trimethylolpropan Trimethylolbutan, Pentaerythrit, Ditrimethylolpropan, Dipentaerythrit, Sorbitol sowie ethoxylierte und/oder propoxylierte Derivate der aufgeführten Alkohole und die bei der (Meth)acrylierung der vorgenannten Verbindungen anfallenden technischen Gemische.

Die Komponente H) ist bevorzugt ausgewählt aus der Gruppe von (Meth)acrylaten von Tetrolen und Hexolen, wie z. B. (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und/oder propoxylierte Derivate der aufgeführten Alkohole und die bei der (Meth)acrylierung der vorgenannten Verbindungen anfallenden technischen Gemische.

Besonders bevorzugt ist die Komponente H) ausgewählt aus der Gruppe von Acrylaten von Pentaerythrit, Ditrimethylolpropan und Dipentaerythrit und die bei der Acrylierung der vorgenannten Verbindungen anfallenden technischen Gemische, ganz besonders bevorzugt ist das Acrylat von Dipentaerythrit.

Die Verbindungen H) dienen zur Erhöhung der Doppelbindungsdichte des Beschichtungsmittels. Eine hohe Doppelbindungsdichte erhöht die Gebrauchseigenschaften (Beständigkeit gegen mechanische oder chemische Einflüsse) der UV-gehärteten Beschichtung. Sie haben allerdings einen Einfluss auf die Trocknungseigenschaften. Daher werden von ihnen bevorzugt ≥ 1 Gew.-% bis ≤ 30 Gew.-%, insbesondere ≥ 5 Gew.-% bis ≤ 25 Gew.-% und ganz besonders bevorzugt ≥ 5 Gew.-% bis ≤ 20 Gew.-% bezogen auf den Gesamtfestkörper des Beschichtungsmittels eingesetzt.

Für die in dem Beschichtungsmittel vorliegenden anorganischen Nanopartikel b) kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel sind solche aus Siliziumoxid, Aluminiumoxid, Ceroxid, Zirkonoxid, Nioboxid und Titanoxid, besonders bevorzugt sind hierbei Siliziumoxid-Nanopartikel.

Die eingesetzten Partikel weisen mittlere Teilchengrößen von ≥ 1 nm bis ≤ 200 nm, bevorzugt von ≥ 3 nm bis ≤ 50 nm, besonders bevorzugt von ≥ 5 nm bis ≤ 20 nm auf. Die mittlere Teilchengröße kann vorzugsweise als Z-Mittelwert mittels dynamischer Lichtstreuung in Dispersion bestimmt werden. Unterhalb von 1 nm Partikelgröße erreichen die Nanopartikel die Größe der Polymerpartikel. Solch kleine Nanopartikel können dann zu einem Viskositätsanstieg der Beschichtung führen, welches nachteilig ist. Oberhalb von 200 nm Partikelgröße können die Partikel teilweise mit bloßem Auge wahrgenommen werden, was nicht erwünscht ist.

Bevorzugt weisen ≥ 75 %, besonders bevorzugt ≥ 90 %, ganz besonders bevorzugt ≥ 95 % aller eingesetzten Partikel die vorstehend definierten Größen auf. Mit zunehmendem Grobanteil in der Partikelgesamtheit werden die optischen Eigenschaften der Beschichtung schlechter, insbesondere kann eine Trübung auftreten.

Das Partikel können so ausgewählt werden, dass der Brechungsindex ihres Materials dem Brechungsindex der ausgehärteten strahlungshärtbaren Beschichtung entspricht. Dann weist die Beschichtung transparente optische Eigenschaften auf. Vorteilhaft ist beispielsweise ein Brechungsindex im Bereich von ≥ 1,35 bis ≤ 1,46.

In einer weiteren Ausführungsform ist die Oberfläche der Nanopartikel in der Beschichtung durch die kovalente und/oder nicht kovalente Anbindung von weiteren Verbindungen modifiziert.

Eine bevorzugte kovalente Oberflächenmodifizierung ist die Silanisierung mit Alkoxysilanen und/oder Chlorsilanen. Besonders bevorzugt ist die partielle Modifizierung mit γ-Glycidoxypropyltrimethoxysilan.

Ein Beispiel für den nicht kovalenten Fall ist eine adsorptiv/assoziative Modifikation durch Tenside oder Blockcopolymere.

Weiterhin ist es möglich, dass die Verbindungen, welche an die Oberfläche der Nanopartikel kovalent und/oder nicht kovalent gebunden sind, auch Kohlenstoff-Kohlenstoff-Doppelbindungen enthalten. Bevorzugt sind hierbei (Meth)acrylatgruppen. Auf diese Weise können die Nanopartikel bei der Strahlenhärtung noch fester in die Bindemittelmatrix eingebunden werden.

In einer bevorzugten Ausführungsform umfasst das strahenhärtbare wässrige Beschichtungsmittel neben dem Polyurethan(meth)acrylat a) ein weiteres Polyurethan(meth)acrylat c), welches von a) verschieden ist.

Vorzugsweise umfasst das Polyurethan(meth)acrylat c) die folgenden Komponenten:
B-1) (Meth)acrylatgruppen umfassende und gegenüber Isocyanaten reaktive Verbindungen,
C-1) gegebenenfalls Polyolverbindungen mit einer OH-Zahl von 10 mg KOH/g bis 500 mg KOH/g, bevorzugt von 28 mg KOH/g bis 256 mg KOH/g, besonders bevorzugt von 35 mg KOH/g bis 128 mg KOH/g
D-1) gegebenenfalls Polyolverbindungen mit einem Molekulargewicht von 50 g/mol bis 500 g/mol,
E-1) eine oder mehrere Verbindungen mit mindestens einer gegenüber isocyanatenreaktiven Gruppe und zusätzlich mindestens einer hydrophilierenden Gruppe,
G-1) gegebenenfalls von B1, D1, E1 verschiedene Verbindungen mit mindestens einer Aminfunktion,
F-1) Polyisocyanate,
H-1) gegebenenfalls Reaktivverdünner, die mindestens eine radikalisch polymerisierbare Gruppe aufweisen.

Komponente B-1) umfasst solche Verbindungen die bereits vorstehend unter A) und/oder B) beschrieben wurden.

Geeignete höhermolekulare Polyole C-1) sind Polyole (worunter auch Diole zu verstehen sind) mit einer OH-Zahl im Bereich von 10 mg KOH/g bis 500 mg KOH/g, bevorzugt von 28 mg KOH/g bis 256 mg KOH/g, besonders bevorzugt von 35 mg KOH/g bis 128 mg KOH/. Bevorzugt werden Polymere mit einer mittleren Hydroxylfunktionalität von ≥ 1,5 bis ≤ 2,5, bevorzugt von ≥ 1,8 bis ≤ 2,2, besonders bevorzugt von ≥ 1,9 bis ≤ 2,1 eingesetzt. Dazu zählen zum Beispiel Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind zum Beispiel Umsetzungsprodukte von Adipinsäure mit Hexandiol, Butandiol oder Neopentylglykol oder Mischungen der genannten Diole. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole mit einer OH-Zahl im Bereich von 10 mg KOH/g bis 500 mg KOH/g, bevorzugt von 28 mg KOH/g bis 256 mg KOH/g, besonders bevorzugt von 35 mg KOH/g bis 128 mg KOH/g, weiterhin Polytetrahydrofurane eines mittleren Molekulargewichts von ≥ 500 g/mol bis ≤ 8000 g/mol, bevorzugt von ≥ 800 g/mol bis ≤ 3000 g/mol.

Ebenfalls geeignet sind hydroxyl-terminierte Polycarbonate, die durch Umsetzung von Diolen oder auch Lacton-modifizierten Diolen oder auch Bisphenolen, wie zum Beispiel Bisphenol A, mit Phosgen oder Kohlensäurediestern wie Diphenylcarbonat oder Dimethylcarbonat zugänglich sind. Beispielhaft seien genannt die polymeren Carbonate des 1,6-Hexandiols mit einer OH-Zahl von 10 mg KOH/g bis 256 mg KOH/g, sowie die Carbonate von Umsetzungsprodukten des 1,6-Hexandiols mit ε-Caprolacton im molaren Verhältnis von ≥ 0,1 bis ≤ 1. Bevorzugt sind vorgenannte Polycarbonatdiole mit einer OH-Zahl von 28 mg KOH/g bis 256 mg KOH/g auf Basis 1,6-Hexandiol und/oder Carbonate von Umsetzungsprodukten des 1,6-Hexandiols mit ε-Caprolacton im molaren Verhältnis von ≥ 0,33 bis ≤ 1. Hydroxyl-terminierte Polyamidalkohole und Hydroxyl-terminierte Polyacrylatdiole sind ebenfalls einsetzbar.

Geeignete niedermolekulare Polyole D-1) sind kurzkettige, vorzugsweise ≥ 2 bis ≤ 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3 -hydroxypropionsäure-(2,2-dimethyl-3 -hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Komponente E-1) umfasst solche Verbindungen die bereits vorstehend unter E) beschrieben wurden.

Geeignete Polyisocyanate (F-1), worunter auch Diisocyanate zu verstehen sind, sind aromatische, araliphatische, aliphatische oder cycloaliphatische Polyisocyanate. Es können auch Mischungen solcher Di- oder Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, Bis(4,4'-isocyanatocyclohexyl)methan, Isocyanatomethyl-1,8-octandiisocyanat, 1,4-Cyclohexylendiisocyanat, 1,4-Phenylendiisocyanat, 2,4- und/oder 2,6-Toluylendiisocyanat, die isomeren Xylendiisocyanate, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Oxadiazintrion,- Uretdion-, Iminooxadiazindionstruktur und Mischungen derselben. Bevorzugt sind Di- oder Polyisocyanate mit cycloaliphatischer oder aromatischer Struktur, da ein hoher Anteil an diesen Strukturelementen, die Trocknungseigenschaften insbesondere die Blockfestigkeit der Beschichtung vor der UV-Härtung positiv beeinflusst. Besonders bevorzugte Diisocyanate sind Isophorondiisocyanat und Bis(4,4'-isocyanatocyclohexyl)methan sowie deren Mischungen.

Komponente G-1) umfasst solche Verbindungen, die bereits vorstehend unter G) beschrieben wurden.

Komponente H-1) umfasst solche Verbindungen, die bereits vorstehend unter H) beschrieben wurden.

In einer Ausführungsform können die Komponenten B-1) bis H-1) im Polyurethan(meth)acrylat c) in folgenden Mengen vorhanden sein, wobei die Summe der einzelnen Gewichtsanteile 100 beträgt:
B-1): ≥ 10 Gew.-% bis ≤ 80 Gew.-%, vorzugsweise ≥ 30 Gew.-% bis ≤ 60 Gew.-%, besonders bevorzugt ≥ 40 Gew.-% bis ≤ 50 Gew.-%.
C-1): ≥ 0 Gew.-% bis ≤ 50 Gew.-%, vorzugsweise 0 Gew.-% bis 30 Gew.-%, besonders bevorzugt 0 Gew.-%.
D-1): ≥ 0 Gew.-% bis ≤ 25 Gewichts-%, vorzugsweise ≥ 0,5 Gew.-% bis ≤ 15 Gewichts-%, besonders bevorzugt ≥ 1 Gew.-% bis ≤ 5 Gew.-%.
E-1): ≥ 1 Gew.-% bis ≤ 20 Gewichts-%, vorzugsweise ≥ 2 Gew.-% bis ≤ 15 Gew.-%, besonders bevorzugt ≥ 3 Gew.-% bis ≤ 10 Gewichts-%.
F-1): ≥ 5 Gew.-% bis ≤ 50 Gew.-%, vorzugsweise ≥ 20 Gew.-% bis ≤ 40 Gew.-%, besonders bevorzugt ≥ 25 Gew.-% bis ≤ 35 Gew.-%.
G-1): ≥ 0 Gew.-% bis ≤ 20 Gew.-%, vorzugsweise ≥ 0,5 Gewichts-% bis ≤ 10 Gew.-%, besonders bevorzugt ≥ 1 Gew.-% bis ≤ 5 Gew.-%.
H-1): ≥ 0 Gew.-% bis ≤ 40 Gew.-%, vorzugsweise ≥ 5 Gew.-% bis ≤ 30 Gew.-%, besonders bevorzugt ≥ 5 Gew.-% bis ≤ 25 Gew.-%.

Komponente d) kann weitere Bindemittel, vorzugsweise Dispersionen, umfassen, die ebenfalls ungesättigte Gruppen enthalten, wie z. B. ungesättigte, polymerisierbare Gruppen enthaltende Dispersionen auf Polyester-, Polyurethan-, Polyepoxy(meth)acrylat-, Polyether-, Polyamid-, Polysiloxan-, Polycarbonat-, Polyepoxy(meth)acrylat-, Polyesteracrylat-, Polyurethan-Polyacrylat- und/oder Polyacrylatbasis.

Es können auch solche Dispersionen auf der Basis von Polyestern, Polyurethanen, Polyethern, Polyamiden, Polyvinylestern, Polyvinylethern, Polysiloxanen, Polycarbonaten, und / oder Polyacrylaten, als Komponente d) eingesetzt werden, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Weiterhin kann Komponente d) Reaktivverdünner, wie vorstehend unter H) beschrieben wurde umfassen.

Zugesetzte Fotoinitiatoren e) sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind zum Beispiel aromatische Ketonverbindungen, zum Beispiel Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide zum Beispiel 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen einzusetzen. Geeignete Initiatoren sind kommerziell erhältlich beispielsweise unter der Bezeichnung Irgacure® und Darocur® (Ciba, Basel, CH) sowie Esacure® (Fratelli Lamberti, Adelate, IT).

Als Hilfs- und Zusatzstoffe f) können gegebenenfalls Stabilisatoren, Lichtschutzmittel wie UV-Absorber und sterisch gehinderte Amine (HALS), weiterhin Antioxidantien sowie Lackhilfsmittel, zum Beispiel Antiabsetzmittel, Entschäumungs- und/oder Netzmittel, Verlaufmittel, Weichmacher, Antistatika, Katalysatoren, Hilfslösemittel und/oder Verdicker sowie Pigmente, Farbstoffe und/oder Mattierungsmittel eingesetzt werden.

Dem Beschichtungsmittel können weiterhin so genannte Vernetzter g) zugesetzt werden, die die Antrocknung und gegebenenfalls die Haftung der strahlungshärtbaren Schicht verbessern sollen.

Es kommen bevorzugt Polyisocyanate, Polyaziridine sowie Polycarbodiimide in Frage. Besonders bevorzugt sind hydrophilierte Polyisocyanate für wässrige Beschichtungsmittel. Die Menge und die Funktionalität der Vernetzer ist insbesondere im Hinblick auf die gewünschte Verformbarkeit der Folie abzustimmen. Im allgemeinen werden ≤ 10 Gew.-% an festem Vernetzer auf den Festgehalt des Beschichtungsmittels zugesetzt. Viele der möglichen Vernetzer reduzieren die Lagerfähigkeit des Beschichtungsmittels, da sie bereits im Beschichtungsmittel langsam reagieren. Der Zusatz der Vernetzer sollte daher entsprechend kurz vor der Applikation das Lacks auf die Folie erfolgen. Hydrophilierte Polyisocyanate sind erhältlich beispielsweise unter der Bezeichnung Bayhydur® (Bayer MaterialScience AG, Leverkusen, DE) und Rhodocoat® (Rhodia, F). Bei Zusatz eines Vernetzers kann sich die notwendige Zeit sowie die notwendige Temperatur, bis optimale Antrocknung erreicht ist, erhöhen. In einer bevorzugten Ausführungsform wird kein Vernetzer verwendet.

Gegenstand der Erfindung ist weiterhin ein Verfahren zur Herstellung von beschichteten Folien, umfassend die Schritte:
1. Bereitstellen eines wässrigen strahlenhärtbaren Beschichtungsmittels, wobei das wässrige strahlenhärtbare Beschichtungsmittel mindestens ein Polyurethan(meth)acrylat a) umfasst, welches erhältlich ist aus der Reaktion einer Reaktionsmischung umfassend:
   A) ein oder mehrere Polyepoxy(meth)acrylate mit einer OH-Zahl von 20 bis 300 mg KOH/g Substanz, bevorzugt von 100 bis 280 mg KOH/g, besonders bevorzugt von 150 bis 250 mg KOH/g,
   B) gegebenenfalls von A) verschiedene Verbindungen mit mindestens einer gegenüber Isocyanat reaktiven Gruppe und mindestens einer strahlenhärtbaren Doppelbindung,
   C) ein oder mehrere lineare aliphatische Polycarbonatpolyole mit einer OH-Zahl von 25 bis 250 mg KOH/g Substanz, vorzugsweise 35 bis 160 mg KOH/g Substanz und besonders bevorzugt 50 bis 80 mg KOH/g Substanz,
   D) gegebenenfalls eine oder mehrere Verbindungen, die mindestens zwei gegenüber Isocyanat reaktiven Gruppen und Molekulargewicht von weniger als 300g/mol, bevorzugt von weniger als 200 g/mol, besonders bevorzugt von weniger als 150 g/mol besitzt,
   E) eine oder mehrere Verbindungen mit mindestens einer gegenüber Isocyanat reaktiven Gruppe und zusätzlich mindestens einer hydrophilierend wirkenden Gruppe,
   F) 4,4'-Diisocyanato-dicyclohexylmethan
   G) gegebenenfalls von A) bis F) verschiedene Verbindungen mit mindestens einer Aminfunktion,
   H) gegebenenfalls Reaktivverdünner mit mindestens einer radikalisch polymerisierbaren Gruppe,
   und wobei das wässrige Beschichtungsmittel weiterhin anorganische Nanopartikel b) mit einer mittleren Teilchengröße von ≥ 1 nm bis ≤ 200 nm, bevorzugt von ≥ 3 nm bis ≤ 50 nm, besonders bevorzugt von ≥ 5 nm bis ≤ 20 nm umfasst;
2. Beschichten von mindestens einer Seite einer Kunststofffolie mit dem wässrigen Beschichtungsmittel aus Schritt 1;
3. Trocknen der beschichteten Folie.

Im Verfahren zur Herstellung der erfindungsgemäß beschichteten Folien kann das wässrige strahlenhärtbare Beschichtungsmittel die bereits vorstehend genannten und detailliert beschriebenen weiteren Komponenten enthalten.

In einer Ausführungsform des erfindungsgemäßen Verfahrens kann das wässrige strahlenhärtbare Beschichtungsmittel aus Schritt 1 als eine 20 bis 60-%ige, vorzugsweise 30 bis 58-%ige Dispersion in Wasser und gegebenenfalls Lösungsmittel eingesetzt werden, und die folgenden Komponenten bezogen auf den Festkörper umfassen:
a) 8,0 bis 65,0 Gew.-%, bevorzugt 10,0 bis 40,0 Gew.-%, besonders bevorzugt 10,0 bis 20,0 Gew.-% Polyurethan(meth)acrylat,
b) 5,0 bis 50,0 Gew.-%, bevorzugt 10,0 bis 40,0 Gew.-%, besonders bevorzugt 10,0 bis 35,0 Gew.-% anorganische Nanopartikel
c) 0 bis 57 Gew.-%, bevorzugt 10,0 bis 57,0 Gew.-%, besonders bevorzugt 37,0 bis 47 Gew.-% Polyurethan(meth)acylat, verschieden von a)
d) 0 bis 30 Gew.-%, bevorzugt 0 bis 20,0 Gew.-%, besonders bevorzugt 0 bis 15 Gew.-% weitere Bindemittel oder Reaktivverdünner,
e) 0,1 bis 5,0 Gew.-%, bevorzugt 0,2 bis 4,0 Gew.-%, besonders bevorzugt 0,5 bis 3,0 Gew.-% Photoinitiator
f) 0 bis 15,0 Gew.-%, bevorzugt 0 bis 10,0 Gew.-%, besonders bevorzugt 2,0 bis 10,0 Gew.-% Hilfs- und Zusatzstoffe
g) 0 bis 10 Gew.-%, bevorzugt 0 bis 5,0 Gew.-%, besonders bevorzugt 0 Gew.-% Vernetzer
wobei die Summe der einzelnen Komponenten 100 ergeben muss.

Geeignete gegebenenfalls mitzuverwendende Lösungsmittel zur Herstellung der Dispersion sind abgestimmt auf die verwendeten Bindemittel sowie das Applikationsverfahren. Vorzugsweise kann Wasser und/oder andere gängige Lösungsmittel aus der Beschichtungstechnik verwendet werden. Als Lösungsmittel können beispielsweise Aceton, Ethylacetat, Butylacetat, Methoxypropylacetat, Diacetonalkohol, Glykole, Glykolether, 1-Methoxy-2propanol, Xylol oder Solventnaphtha der Fa. Exxon-Chemie als aromatenhaltiges Lösemittel sowie Gemische der genannten Lösemittel verwendet werden.

Zur Herstellung des Polyurethan(meth)acrylats a) können sämtliche, aus dem Stand der Technik bekannte Verfahren wie Emulgator-Scherkraft, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt sind das Schmelz-Emulgier- und das Aceton-Verfahren. Besonders bevorzugt wird das Aceton-Verfahren.

Die Herstellung des Polyurethan(meth)acrylats a) kann durch Umsetzen der Komponenten A) bis E) in einem oder mehreren Reaktionsschritten mit Komponente F) erfolgen, wobei ein Polyurethan(meth)acrylat a) erhalten wird, wobei ein Neutralisationsmittel zur Erzeugung der für die Dispergierung notwendigen ionischen Gruppen vor, während oder nach der Herstellung des Additionsproduktes von A) bis F) zugegeben werden kann, gefolgt von einem Dispergierschritt durch Zugabe von Wasser zum Additionsprodukt von A) bis F) oder Überführen des Additionsproduktes von A) bis F) in eine wässrige Vorlage, wobei vor, während oder nach der Dispergierung eine Kettenverlängerung mittels Komponente G) erfolgen kann.

Weiterhin kann bei der Herstellung gemäß vorstehender Beschreibung, ein oder mehrere Reaktivverdünner (Komponente H)), enthaltend mindestens eine radikalisch polymerisierbare Gruppe beigemischt werden.

Zur Herstellung strahlenhärtbarer, wässriger Bindemittel auf der Basis von Polyurethan(meth)acrylaten a) werden die Komponenten A) bis E) im Reaktor vorgelegt und gegebenenfalls mit Aceton verdünnt. Gegebenenfalls kann auch Komponente H) zu den Komponenten A) bis E) zugesetzt werden.

Zur Beschleunigung der Reaktion können Katalysatoren eingesetzt werden. Dazu kommen dem Fachmann an sich bekannte Urethanisierungskatalysatoren wie z.B. tertiäre Amine oder Lewis-Säuren in Frage. Beispielhaft genannt seien Zinnverbindungen wie z.B. Zinnoctoat, Zinnacetylacetonat, Zinndichlorid oder Organozinnverbindungen, wie z.B. Dibutylzinndiacetat, Dibutylzinndilaurat, Dibutylzinn-bis-acetoacetonat oder Zinkverbindungen, wie z.B. Zinkacetylacetonat oder Zinkoctoat. Ebenfalls denkbar ist der Einsatz von Lewis-sauren Metallverbindungen, die Molybdän, Vanadium, Zirkonium, Cäsium, Bismuth oder Wolfram enthalten, wie z.B. Bismuth(III)octoat. Bevorzugt sind Dibutylzinndilaurat, Zinnoctoat und. Bismuth(III)octoat.

Zusammen mit solchen Lewis-Säuren können zur Einstellung der Reaktivität auch saure Co-Agentien wie z.B. Dibutylphosphat mitverwendet werden.

Die Katalysatorkomponente wird, sofern mitverwendet, in Mengen von 0,001 - 5,0 Gew.-%, bevorzugt 0,001 - 0,1 Gew.-% bezogen auf den Festkörpergehalt des Verfahrensprodukts eingesetzt.

Zur Stabilisierung gegen vorzeitige Polymerisation können als Bestandteil einer oder mehrerer Komponenten (A) bis F)) vor und/oder während der Reaktion Stabilisatoren zugegeben werden, die die Polymerisation inhibieren. Beispiele für geeignete Stabilisatoren sind z.B. Phenothiazin und Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente F) gebunden werden können. Hierfür besonders geeignet sind 2,2,6,6-Tetramethyl-4-hydroxy-piperidin-N-Oxid.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden.

Falls mitverwendet, wird die Stabilisatorkomponente in Mengen von 0,001 - 5,0 Gew.-%, bevorzugt 0,01 - 2,0 Gew.-% und besonders bevorzugt 0,05 - 1,0 Gew.-% bezogen auf den Festkörpergehalt des Verfahrensprodukts eingesetzt.

In der Regel wird die Mischung auf 30 bis 60 °C erhitzt, um ein Anspringen der Reaktion zu bewirken. Anschließend dosiert man das 4,4'-Diisocyanato-dicyclohexylmethan F) zu. Auch die umgekehrte Variante ist möglich, wobei dann 4,4-Diisocyanato-dicyclohexylmethan F) vorgelegt und die isocyanatreaktiven Komponenten A) bis E) zugegeben werden. Die Zugabe der Komponenten A) bis E) kann auch nacheinander und in beliebiger Reihenfolge erfolgen. Ebenfalls ist eine stufenweise Umsetzung der Komponenten möglich, das heißt die separate Umsetzung von Komponente F) mit einer oder mehreren isocyanatreaktiven Komponenten A) bis E) bevor das gewonnene Addukt mit den noch nicht verwendeten Komponenten weiter umgesetzt wird.

Zur Kontrolle der Reaktion wird der Isocyanatgehalt in regelmäßigen Abständen über Titration, Infrarot- oder Nahinfrarot-Spektroskopie bestimmt.

Die molaren Verhältnisse von Isocyanatgruppen in F) zu gegenüber Isocyanat reaktiven Gruppen in A) bis E) betragen von 0,8 : 1 bis 2,5 : 1, bevorzugt 1,2 : 1 bis 1,5 : 1.

Nach der Herstellung des Polyurethan(meth)acrylats a) nach dem vorstehend beschriebenen Verfahren aus den Komponenten A) bis F) erfolgt, falls dies noch nicht in den Ausgangsmolekülen durchgeführt wurde, die Salzbildung der dispergierend wirkenden Gruppen der Komponente E). Im Fall, dass Komponente E) saure Gruppen enthält, werden bevorzugt Basen ausgewählt aus der Gruppe von Triethylamin, Ethyldiisopropylamin, Dimethylcyclohexylamin, Dimethylethanolamin, Ammoniak, N-Ethylmorpholin, LiOH, NaOH und / oder KOH eingesetzt. Im Fall, dass Komponente E) basische Gruppen enthält, werden bevorzugt Säuren ausgewählt aus der Gruppe von Milchsäure, Essigsäure, Phosphorsäure, Chlorwasserstoffsäure und / oder Schwefelsäure eingesetzt. Werden als Komponente E) nur Ethergruppen enthaltende Verbindungen eingesetzt, entfällt dieser Neutralisationsschritt.

Im Anschluss kann optional ein Reaktivverdünner H) oder einer Mischung von Reaktivverdünnern H) zugegeben werden. Das Zumischen von Komponente H) erfolgt bevorzugt bei 30 bis 45 °C. Sobald diese sich gelöst hat, folgt gegebenenfalls der letzte Reaktionsschritt, bei dem im wässrigen Medium eine Molekulargewichtserhöhung und die Ausbildung der für das erfindungsgemäße Beschichtungssystem benötigten Dispersionen stattfinden: Das Polyurethan(meth)acrylat a), synthetisiert aus den Komponenten A) bis F) und gegebenenfalls der oder die Reaktivverdünner H), gegebenenfalls gelöst in Aceton, wird unter starkem Rühren entweder in das Dispergierwasser, das das oder die Amine G) enthält, eingetragen oder man rührt umgekehrt die Dispergierwasser-Amin-Mischung zu der Polyurethanacrylatlösung. Außerdem bilden sich die Dispersionen aus, die im erfindungsgemäßen Beschichtungsmittel enthalten sind. Die eingesetzte Menge an Amin G) hängt von den noch vorhandenen, nicht umgesetzten Isocyanatgruppen ab. Die Umsetzung der noch freien Isocyanatgruppen mit dem Amin G) kann zu 35 % bis 150 % erfolgen. In dem Fall, dass ein Unterschuss an Amin G) eingesetzt wird, reagieren noch freie Isocyanatgruppen langsam mit Wasser ab. Wird ein Überschuss an Amin G) verwendet, so liegen keine unreagierten Isocyanatgruppen mehr vor, und es wird ein aminfunktionelles Polyurethan erhalten. Bevorzugt werden 60 % bis 110 %, besonders bevorzugt 70 % bis 100 % und ganz besonders bevorzugt 75 % bis 90 % der noch freien Isocyanatgruppen mit dem Amin G) umgesetzt.

In einer weiteren Variante ist es möglich, die Molekulargewichtserhöhung durch das Amin G) bereits in acetonischer Lösung, d. h. vor der Dispergierung, und gegebenenfalls vor oder nach der Zugabe des oder der Reaktivverdünner H) durchzuführen.

In einer weiteren Variante ist es möglich, die Molekulargewichtserhöhung durch das Amin G) nach dem Dispergierschritt durchzuführen.

Optional kann der Reaktivverdünner H) auch zu einem späteren Zeitpunkt dem Beschichtungsmittel beigemengt werden als Komponente d).

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, den Dispergierschritt parallel, das heißt gleichzeitig oder zumindest teilweise gleichzeitig durchzuführen.

Während oder im Anschluss an die Herstellung des Polyurethan(meth)acrylats a) werden die gegebenenfalls oberflächenmodifizierten Nanopartikel b) eingebracht. Dies kann durch einfaches Einrühren der Partikel erfolgen. Denkbar ist jedoch auch der Einsatz erhöhter Dispergierenergie, wie beispielsweise durch Ultraschall, Strahldispergierung oder Hochgeschwindigkeitsrüher nach dem Rotor-Stator-Prinzip erfolgen kann. Bevorzugt ist einfaches mechanisches Einrühren.

Die Partikel können prinzipiell sowohl in Pulverform als auch in Form von kolloiden Suspensionen oder Dispersionen in geeigneten Lösungsmitteln eingesetzt werden. Die anorganischen Nanopartikel werden bevorzugt in kolloid disperser Form in organischen Lösungsmitteln (Organosole) oder besonders bevorzugt in Wasser eingesetzt.

Für die Organosole geeignete Lösemittel sind Methanol, Ethanol, i-Propanol, Aceton, 2-Butanon, Methyl-isobutylketon, Butylacetat, Ethylacetat, 1-Methoxy-2-propylacetat, Toluol, Xylol, 1,4-Dioxan, Diacetonalkohol, Ethylenglykol-n-propylether oder beliebige Gemische solcher Lösungsmittel. Geeignete Organosole weisen einen Feststoffgehalt von ≥ 10 Gewichts-% bis ≤ 60 Gewichts-%, bevorzugt ≥ 15 Gewichts-% bis ≤ 50 Gewichts-% auf. Geeignete Organosole sind beispielsweise Siliziumdioxid-Organosole, wie sie zum Beispiel unter den Handelsnamen Organosilicasol® und Suncolloid® (Nissan Chem. Am. Corp.) oder unter der Bezeichnung Highlink®NanO G (Clariant GmbH) erhältlich sind.

Soweit die Nanopartikel in organischen Lösemitteln (Organosole) zum Einsatz kommen, werden diese mit den Polyurethanen, während deren Herstellung vor deren Dispergierung mit Wasser vermischt. Die resultierenden Mischungen werden anschließend durch Zusatz von Wasser oder durch Überführung in Wasser dispergiert. Das organische Lösemittel des Organosols kann nach Bedarf vor oder nach der Dispergierung mit Wasser, vorzugsweise im Anschluss an die Dispergierung, mit Wasser destillativ entfernt werden.

Im Sinne der vorliegenden Erfindung werden weiterhin bevorzugt anorganische Nanopartikel b) in Form ihrer wässrigen Zubereitungen verwendet. Besonders bevorzugt ist der Einsatz anorganischer Partikel in Form wässriger Zubereitungen oberflächenmodifizierter, anorganischer Nanopartikel. Diese können beispielsweise vor oder gleichzeitig mit der Einarbeitung in das silanmodifizierte, polymere organische Bindemittel oder eine wässrige Dispersion des silanmodifizierten, polymeren organischen Bindemittels durch Silanisierung modifiziert werden.

Bevorzugte wässrige, kommerzielle wässrige Nanopartikel-Dispersionen sind unter der Bezeichnung Levasil® (H.C. Starck GmbH, Goslar, Deutschland) und Bindzil® (EKA Chemical AB, Bohus, Sweden) erhältlich. Besonders bevorzugt werden wässrige Dispersionen von Bindzil® CC 15, Bindzil® CC 301 und Bindzil® CC 401 der Fa. EKA (EKA Chemical AB, Bohus, Sweden) eingesetzt.

Soweit die Nanopartikel in wässriger Form zum Einsatz kommen, können diese den wässrigen Dispersionen der Polyurethan(meth)acrylate a) und/oder c) zugesetzt werden.

In einer weiteren Ausführungsform wird bei der Herstellung der Polyurethan(meth)acrylat-enthaltenden Dispersionen anstelle von Wasser die bevorzugt weiter mit Wasser verdünnten wässrigen Nanopartikel-Dispersion verwendet.

Polyurethan(meth)acrylate c) sind nach den üblichen Methoden zur Polyurethanherstellung erhältlich, wie bereits unter der Herstellung der Polyurethan(meth)acrylate a) beschrieben wurde.

Das Beschichten einer Folie mit dem erfindungsgemäßen strahlenhärtbaren Beschichtungsmittel erfolgt vorzugsweise mittels Walzen, Rakeln, Fluten, Spritzen oder Gießen. Ebenfalls möglich sind Druckverfahren, Tauchen, Transferverfahren und Streichen. Die Applikation sollte unter Ausschluss von Strahlung erfolgen, die zu einer vorzeitigen Polymerisation der Acrylat- und/oder Methacrylatdoppelbindungen des Polyurethans führen kann.

Das Trocknen der Polymer-Dispersion schließt sich an die Applikation des Beschichtungsmittels auf die Folie an. Hierzu wird insbesondere mit erhöhten Temperaturen in Öfen und mit bewegter und gegebenenfalls auch entfeuchteter Luft (Konvektionsöfen, Düsentrockner) sowie Wärmestrahlung (IR, NIR) gearbeitet. Weiterhin können Mikrowellen zum Einsatz kommen. Es ist möglich und vorteilhaft, mehrere dieser Trocknungsverfahren zu kombinieren.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Die vorliegende Erfindung betrifft weiterhin die Verwendung von beschichteten Folien gemäß der Erfindung zur Herstellung von Formkörpern. Die erfindungsgemäß hergestellten Folien sind wertvolle Materialien zur Herstellung von Gebrauchsgegenständen. So kann die Folie Verwendung finden in der Herstellung von Fahrzeuganbauteilen, Kunststoffteilen wie Blenden für den Fahrzeug(innen)bau und/oder Flugzeug(innen)bau, Möbelbau, elektronischen Geräten, Kommunikationsgeräten, Gehäusen und dekorativen Gegenständen.

Die vorliegende Erfindung betrifft ebenfalls ein Verfahren zur Herstellung von Formkörpern mit einer strahlungsgehärteten Beschichtung, umfassend die Schritte:
1. Bereitstellen einer beschichteten Folie gemäß der vorliegenden Erfindung,
2. optionales Bedrucken z.B. mittels Siebdruck auf der der Beschichtung abgewandten Seite der Folie,
3. Formen des Formkörpers mittels Thermoformen oder High-Pressure-Forming,
4. Härten der strahlungshärtbaren Beschichtung durch aktinische Strahlung, vorzugsweise UV-Strahlung.

Die beschichtete Folie wird hierbei durch thermisches Verformen in die gewünschte Endform gebracht werden. Dies kann mittels Verfahren wie Tiefziehen, Vakuum-Tiefziehen, High-Pressure-Forming, Pressen oder Blasverformen erfolgen.

Nach dem Verformungsschritt wird die Beschichtung der Folie durch Bestrahlung mit aktinischer Strahlung, vorzugsweise mit UV-Strahlung endgehärtet.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind zum Beispiel Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gewichts-% bis ≤ 10 Gewichts-%, besonders bevorzugt von ≥ 0,2 Gewichts-% bis ≤ 3,0 Gewichts-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² , besonders bevorzugt ≥250 mJ/cm² bis ≤ 3000 mJ/cm² eingesetzt, wobei die Energie auch in mehreren Stufen eingetragen werden kann.

Die resultierende gehärtete, beschichtete, verformte Folie zeigt sehr gute Beständigkeiten gegenüber Lösungsmittel, färbenden Flüssigkeiten wie sie im Haushalt vorkommen sowie hohe Härte, gute Kratz- und Abriebbeständigkeiten bei hoher optischer Transparenz und eine sehr hohe Hydrolysebeständigkeit.

In einer Ausführungsform erfolgt das Formen des Formkörpers in einem Werkzeug bei einem Druck von ≥ 20 bar bis ≤ 150 bar. Vorzugsweise liegt der Druck bei diesem Hochdruckverformverfahren in einem Bereich von ≥ 50 bar bis ≤ 120 bar oder in einem Bereich von ≥ 90 bar bis ≤ 110 bar. Der anzuwendende Druck wird insbesondere von der Dicke der zu verformenden Folie und der Temperatur sowie dem verwendeten Folienmaterial bestimmt.

In einer weiteren Ausführungsform findet das Formen des Formkörpers bei einer Temperatur von ≥ 20 °C bis ≤ 60 °C unterhalb der Erweichungstemperatur des Materials der Folie statt. Vorzugsweise liegt diese Temperatur um ≥ 30 °C bis ≤ 50 °C oder um ≥ 40 °C bis ≤ 45 °C unterhalb der Erweichungstemperatur. Dieses einer Kaltverformung vergleichbare Vorgehen hat den Vorteil, dass dünnere Folien, die zu exakterer Ausformung führen, verwendet werden können. Ein weiterer Vorteil sind kürzere Taktzeiten sowie eine geringere thermische Belastung der Beschichtung. Solche Verformungstemperaturen werden vorteilhafterweise in Kombination mit einem Hochdruckverformverfahren eingesetzt.

In einer weiteren Ausführungsform umfasst das Verfahren weiterhin den Schritt:
5. Auftragen eines Polymers, auf die der ausgehärteten Schicht entgegengesetzten Seite der Folie.

Die verformte beschichtete Folie kann vor oder bevorzugt nach der Endhärtung durch Verfahren wie zum Beispiel Hinterspritzen oder auch Hinterschäumen mit gegebenenfalls gefüllten Polymeren wie Thermoplasten oder auch reaktiven Polymeren wie Zweikomponenten-Polyurethansystemen modifiziert werden. Dabei kann wahlweise auch eine Klebschicht als Haftvermittler eingesetzt werden. Es entstehen Formkörper, die dort, wo ihre Oberfläche durch die gehärtete Beschichtung auf der Folie gebildet wird, über hervorragende Gebrauchseigenschaften verfügen.

Gegenstand der Erfindung ist weiterhin ein Formkörper, herstellbar durch ein Verfahren gemäß der vorliegenden Erfindung. Solche Formkörper können zum Beispiel Fahrzeuganbauteile, Kunststoffteile wie Blenden für den Fahrzeug(innen)bau und/oder Flugzeug(innen)bau, Möbelbau, elektronische Geräte, Kommunikationsgeräte, Gehäusen oder dekorativen Gegenstände sein.

Im Folgenden werden verschiedene Ausführungsformen der Erfindung beschrieben.

Die erfindungsgemäß beschichtete Folie umfasst in einer ersten Ausführungsform eine Kunststofffolie und ein strahlungshärtbares wässriges Beschichtungsmittel, wobei das Beschichtungsmittel mindestens umfasst
a) ein Polyurethan(meth)acrylat, welches erhältlich ist aus der Reaktion einer Reaktionsmischung umfassend:
   A) ein oder mehrere Polyepoxy(meth)acrylate mit einer OH-Zahl von 20 bis 300 mg KOH/g, vorzugsweise von 100 bis 280 mg KOH/g, besonders bevorzugt von 150 bis 250 mg KOH/g Substanz,
   B) gegebenenfalls von A) verschiedene Verbindungen mit mindestens einer gegenüber Isocyanat reaktiven Gruppe und mindestens einer strahlenhärtbaren Doppelbindung,
   C) ein oder mehrere lineare aliphatische Polycarbonatpolyole mit einer OH-Zahl von 25 bis 250 mg KOH/g, vorzugsweise von 35 bis 160 mg KOH/g, besonders bevorzugt von 50 bis 80 mg KOH/g Substanz,
   D) gegebenenfalls eine oder mehrere Verbindungen, die mindestens zwei gegenüber Isocyanat reaktiven Gruppen und ein Molekulargewicht von weniger als 300g/mol, vorzugsweise weniger als 200 g/mol, besonders bevorzugt weniger als 150 g/mol ausweist,
   E) eine oder mehrere Verbindungen mit mindestens einer gegenüber Isocyanat reaktiven Gruppe und zusätzlich mindestens einer hydrophilierend wirkenden Gruppe,
   F) 4,4'-Diisocyanato-dicyclohexylmethan
   G) gegebenenfalls von A) bis F) verschiedene Verbindungen mit mindestens einer Aminfunktion,
   H) gegebenenfalls Reaktivverdünner
   und
b) anorganische Nanopartikel mit einer mittleren Teilchengröße von ≥ 1 nm bis ≤ 200 nm, vorzugsweise von ≥ 3 nm bis ≤ 50nm, besonders bevorzugt von ≥ 5 nm bis ≤ 20 nm.

In einer zweiten Ausführungsform der beschichteten Folie gemäß der vorstehenden Ausführungsform umfasst das Beschichtungsmittel weiterhin folgende Komponenten:
a) 8,0 bis 65,0 Gew.-%, vorzugsweise 10,0 bis 40,0 Gew.-%, besonders bevorzugt 10,0 bis 20,0 Gew.-%,Polyurethan(meth)acrylat,
b) 5,0 bis 50,0 Gew.-%, vorzugsweise von 10,0 bis 40,0 Gew.-%, besonders bevorzugt von 15,0 bis 35,0 Gew.-% anorganische Nanopartikel,
c) 0 bis 57,0 Gew.-%, vorzugsweise 10,0 bis 57,0 Gew.-%, besonders bevorzugt 37,0 bis 47,0 Gew.-% Polyurethan(meth)acylat, verschieden von a),
d) 0 bis 30,0 Gew.-%, vorzugsweise 0 bis 20,0 Gew.-%, besonders bevorzugt 0 bis 15,0 Gew.-%, weitere Bindemittel oder Reaktivverdünner,
e) 0,1 bis 5,0 Gew.-%, vorzugsweise 0,2 bis 4,0 Gew.-%, besonders bevorzugt 0,5 bis 3,0 Gew.-%, Photoinitiator
f) 0 bis 15,0 Gew.-%, vorzugsweise 0 bis 10,0 Gew.-%, besonders bevorzugt 2,0 bis 10,0 Gew.-%, Hilfs- und Zusatzstoffe
g) 0 bis 10,0 Gew.-%, vorzugsweise 0 bis 5,0 Gew.-%, besonders bevorzugt 0 Gew. % Vernetzer,
wobei die Mengenangaben auf getrockneten Film bezogen sind und die Summe der einzelnen Komponenten 100 ergeben muss.

In einer dritten Ausführungsform der beschichteten Folie gemäß der vorstehenden Ausführungsformen ist c) in einer Menge von 10,0 bis 57,0 Gew.-% enthalten.

In einer vierten Ausführungsform der Erfindung gemäß der vorstehend beschriebenen Ausführungsformen umfasst c) die Komponenten:
B-1) (Meth)acrylatgruppen umfassende und gegenüber Isocyanaten reaktive Verbindungen,
C-1) gegebenenfalls Polyolverbindungen mit einer OH-Zahl von 10 mg KOH/g bis 500 mg KOH/g, bevorzugt von 28 mg KOH/g bis 256 mg KOH/g, besonders bevorzugt von 35 mg KOH/g bis 128 mg KOH/g
D-1) gegebenenfalls Polyolverbindungen mit einem Molekulargewicht von 50 g/mol bis 500 g/mol,
E-1) eine oder mehrere Verbindungen mit mindestens einer gegenüber isocyanatenreaktiven Gruppe und zusätzlich mindestens einer hydrophilierenden Gruppe,
G-1) gegebenenfalls von B1, D1, E1 verschiedene Verbindungen mit mindestens einer Aminfunktion,
F-1) Polyisocyanate,
H-1) gegebenenfalls Reaktivverdünner, die mindestens eine radikalisch polymerisierbare Gruppe aufweisen.

In einer fünften Ausführungsform der Erfindung gemäß der vorstehen beschriebenen Ausführungsformen, umfasst c) die folgenden Komponenten in einer Menge von
B-1): ≥ 10 Gew.-% bis ≤ 80 Gew.-%, vorzugsweise ≥ 30 Gew.-% bis ≤ 60 Gew.-%, besonders bevorzugt ≥ 40 Gew.-% bis ≤ 50 Gew.-%.
C-1): ≥ 0 Gew.-% bis ≤ 50 Gew.-%, vorzugsweise 0 Gew.-% bis 30 Gew.-%, besonders bevorzugt 0 Gew.-%.
D-1): ≥ 0 Gew.-% bis ≤ 25 Gewichts-%, vorzugsweise ≥ 0,5 Gew.-% bis ≤ 15 Gewichts-%, besonders bevorzugt ≥ 1 Gew.-% bis ≤ 5 Gew.-%.
E-1): ≥ 1 Gew.-% bis ≤ 20 Gewichts-%, vorzugsweise ≥ 2 Gew.-% bis ≤ 15 Gew.-%, besonders bevorzugt ≥ 3 Gew.-% bis ≤ 10 Gewichts-%.
F-1): ≥ 5 Gew.-% bis ≤ 50 Gew.-%, vorzugsweise ≥ 20 Gew.-% bis ≤ 40 Gew.-%, besonders bevorzugt ≥ 25 Gew.-% bis ≤ 35 Gew.-%.
G-1): ≥ 0 Gew.-% bis ≤ 20 Gew.-%, vorzugsweise ≥ 0,5 Gewichts-% bis ≤ 10 Gew.-%, besonders bevorzugt ≥ 1 Gew.-% bis ≤ 5 Gew.-%.
H-1): ≥ 0 Gew.-% bis ≤ 40 Gew.-%, vorzugsweise ≥ 5 Gew.-% bis ≤ 30 Gew.-%, besonders bevorzugt ≥ 5 Gew.-% bis ≤ 25 Gew.-%,
wobei die Summe der einzelnen Gewichtsanteile 100 ergibt.

In einer sechsten Ausführungsform der Erfindung gemäß der vorstehend beschriebenen Ausführungsformen ist der Kunststoff der Kunststofffolie ausgewählt ist aus der Gruppe bestehend aus thermoplastischem Polyurethan, Polymethylmethacrylat (PMMA) sowie modifizierte Varianten von PMMA, Polycarbonat (PC), Copolycarbonat, Acrylnitril-Styrol-Acrylester-Copolymerisaten (ASA), Acrylnitril-Butadien-Styrol-Copolymerisaten (ABS) und Polybutylenterephthalat/Polycarbonat.

In einer siebten Ausführungsform der Erfindung gemäß der vorstehend beschriebenen Ausführungsformen ist im Polyurethan(meth)acrylat (a) A) ein Umsetzungsprodukt von Acrylsäure und/oder Methacrylsäure mit aromatischen oder aliphatischen Glycidylethern ist, und C) erhältlich ist durch Umesterung von Diphenylcarbonat, Dimethylcarbonat order Diethylcarbont mit linearen, aliphatischen Diolen, ausgewählt aus der Gruppe bestehend aus 1,2-Ethandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecadiol.

In einer achten Ausführungsform der Erfindung gemäß der vorstehend beschriebenen Ausführungsformen ist die Oberfläche der Nanopartikel in der Beschichtung durch die kovalente und/oder nicht kovalente Anbindung von weiteren Verbindungen modifiziert ist.

In einer neunten Ausführungsform der Erfindung gemäß der vorstehend beschriebenen Ausführungsformen sind die Nanopartikel ausgewählt sind aus der Gruppe bestehend aus Partikeln aus Siliziumoxid, Aluminiumoxid, Ceroxid, Zirkonoxid, Nioboxid und Titanoxid und eine mittlere Teilchengröße von ≥ 3 nm bis ≤ 50 nm aufweisen.

In einer zehnten Ausführungsform der Erfindung umfasst das Verfahren zur Herstellung von beschichteten Folien gemäß der vorstehend beschriebenen Ausführungsformen die Schritte
1. Bereitstellen eines wässrigen strahlenhärtbaren Beschichtungsmittels, wobei das wässrige strahlenhärtbare Beschichtungsmittel mindestens ein Polyurethan(meth)acrylat a) umfasst, welches erhältlich ist aus der Reaktion einer Reaktionsmischung umfassend:
   A) ein oder mehrere Polyepoxy(meth)acrylate mit einer OH-Zahl von 20 bis 300 mg KOH/g Substanz, bevorzugt von 100 bis 280 mg KOH/g, besonders bevorzugt von 150 bis 250 mg KOH/g,
   B) gegebenenfalls von A) verschiedene Verbindungen mit mindestens einer gegenüber Isocyanat reaktiven Gruppe und mindestens einer strahlenhärtbaren Doppelbindung,
   C) ein oder mehrere lineare aliphatische Polycarbonatpolyole mit einer OH-Zahl von 25 bis 250 mg KOH/g Substanz, vorzugsweise 35 bis 160 mg KOH/g Substanz und besonders bevorzugt 50 bis 80 mg KOH/g Substanz,
   D) gegebenenfalls eine oder mehrere Verbindungen, die mindestens zwei gegenüber Isocyanat reaktiven Gruppen und Molekulargewicht von weniger als 300g/mol, bevorzugt von weniger als 200 g/mol, besonders bevorzugt von weniger als 150 g/mol besitzt,
   E) eine oder mehrere Verbindungen mit mindestens einer gegenüber Isocyanat reaktiven Gruppe und zusätzlich mindestens einer hydrophilierend wirkenden Gruppe,
   F) 4,4'-Diisocyanato-dicyclohexylmethan
   G) gegebenenfalls von A) bis F) verschiedene Verbindungen mit mindestens einer Aminfunktion,
   H) gegebenenfalls Reaktivverdünner mit mindestens einer radikalisch polymerisierbaren Gruppe,
   und wobei das wässrige Beschichtungsmittel weiterhin anorganische Nanopartikel b) mit einer mittleren Teilchengröße von ≥ 1 nm bis ≤ 200 nm, bevorzugt von ≥ 3 nm bis ≤ 50 nm, besonders bevorzugt von ≥ 5 nm bis ≤ 20 nm umfasst;
2. Beschichten von mindestens einer Seite einer Kunststofffolie mit dem wässrigen Beschichtungsmittel aus Schritt;
3. Trocknen der beschichteten Folie.

In einer elften Ausführungsform der Erfindung gemäß der zehnten Ausführungsform wird das wässrige strahlenhärtbare Beschichtungsmittel aus Schritt 1 als eine 20 bis 60-%ige, vorzugsweise 30 bis 58-%ige Dispersion in Wasser und gegebenenfalls Lösungsmittel eingesetzt, und die folgenden Komponenten bezogen auf den Festkörper umfassen:
a) 8,0 bis 65,0 Gew.-%, bevorzugt 10,0 bis 40,0 Gew.-%, besonders bevorzugt 10,0 bis 20,0 Gew.-% Polyurethan(meth)acrylat,
b) 5,0 bis 50,0 Gew.-%, bevorzugt 10,0 bis 40,0 Gew.-%, besonders bevorzugt 10,0 bis 35,0 Gew.-% anorganische Nanopartikel
c) 0 bis 57 Gew.-%, bevorzugt 10,0 bis 57,0 Gew.-%, besonders bevorzugt 37,0 bis 47 Gew.-% Polyurethan(meth)acylat, verschieden von a)
d) 0 bis 30 Gew.-%, bevorzugt 0 bis 20,0 Gew.-%, besonders bevorzugt 0 bis 15 Gew.-% weitere Bindemittel oder Reaktivverdünner,
e) 0,1 bis 5,0 Gew.-%, bevorzugt 0,2 bis 4,0 Gew.-%, besonders bevorzugt 0,5 bis 3,0 Gew.-% Photoinitiator,
f) 0 bis 15,0 Gew.-%, bevorzugt 0 bis 10,0 Gew.-%, besonders bevorzugt 2,0 bis 10,0 Gew.-% Hilfs- und Zusatzstoffe,
g) 0 bis 10 Gew.-%, bevorzugt 0 bis 5,0 Gew.-%, besonders bevorzugt 0 Gew.-% Vernetzer,
wobei die Summe der einzelnen Komponenten 100 ergeben muss.

In einer zwölften Ausführungsform der Erfindung werden die beschichteten Folien gemäß Ausführungsformen 1 bis 9 zur Herstellung von Formkörpern verwendet.

Eine dreizehnten Ausführungsform der Erfindung umfasst ein Verfahren zur Herstellung von Formkörpern mit den Schritten:
1. Bereitstellen einer beschichteten Folie gemäß Ausführungsform 1 bis 9
2. optionales Bedrucken z.B. mittels Siebdruck auf der der Beschichtung abgewandten Seite der Folie,
3. Formen des Formkörpers mittels Thermoformen oder High-Pressure-Forming,
4. Härten der strahlungshärtbaren Beschichtung durch aktinische Strahlung, vorzugsweise UV-Strahlung.

Eine vierzehnte Ausführungsform der Erfindung umfasst ein Verfahren gemäß der dreizehnten Ausführungsform, wobei das Formen des Formkörpers in einem Werkzeug bei einem Druck von ≥ 20 bar bis ≤ 150 bar und bei einer Temperatur von ≥ 20 °C bis ≤ 60 °C unterhalb der Erweichungstemperatur des Materials der Folie erfolgt.

Eine fünfzehnte Ausführungsform der Erfindung umfasst ein Verfahren gemäß der dreizehnten und vierzehnten Ausführungsform, weiterhin umfassend den Schritt:
5. Auftragen eines Polymers auf die der ausgehärteten Schicht entgegengesetzten Seite der Folie.

Eine sechzehnte Ausführungsform der Erfindung umfasst einen Formkörper, der herstellbar ist durch ein Verfahren gemäß der dreizehnten bis zur fünfzehnten Ausführungsform.

Eine siebzehnte Ausführungsform umfasst ein wässriges Bindemittel, erhältlich ist aus der Reaktion einer Reaktionsmischung umfassend:
A) ein oder mehrere Polyepoxy(meth)acrylate mit einer OH-Zahl von 20 bis 300 mg KOH/g, vorzugsweise von 100 bis 280 mg KOH/g, besonders bevorzugt von 150 bis 250 mg KOH/g Substanz,
B) gegebenenfalls von A) verschiedene Verbindungen mit mindestens einer gegenüber Isocyanat reaktiven Gruppe und mindestens einer strahlenhärtbaren Doppelbindung,
C) ein oder mehrere lineare aliphatische Polycarbonatpolyole mit einer OH-Zahl von 25 bis 250 mg KOH/g, vorzugsweise von 35 bis 160 mg KOH/g, besonders bevorzugt von 50 bis 80 mg KOH/g Substanz,
D) gegebenenfalls eine oder mehrere Verbindungen, die mindestens zwei gegenüber Isocyanat reaktiven Gruppen und ein Molekulargewicht von weniger als 300g/mol, vorzugsweise weniger als 200 g/mol, besonders bevorzugt weniger als 150 g/mol ausweist,
E) eine oder mehrere Verbindungen mit mindestens einer gegenüber Isocyanat reaktiven Gruppe und zusätzlich mindestens einer hydrophilierend wirkenden Gruppe,
F) 4,4'-Diisocyanato-dicyclohexylmethan
G) gegebenenfalls von A) bis F) verschiedene Verbindungen mit mindestens einer Aminfunktion,
H) gegebenenfalls Reaktivverdünner.

Eine achtzehnte Ausführungsform der Erfindung umfasst ein Beschichtungsmittel, umfassend
a) ein Polyurethan(meth)acrylat gemäß Ausführungsform siebzehn,
b) anorganische Nanopartikel mit einer mittleren Teilchengröße von ≥ 1 nm bis ≤ 200 nm,
c) gegebenenfalls Polyurethan(meth)acylat, verschieden von a)
d) gegebenenfalls weitere Bindemittel oder Reaktivverdünner,
e) Photoinitiator
f) gegebenenfalls Hilfs- und Zusatzstoffe
g) gegebenenfalls Vernetzer,
wobei das Beschichtungsmittel als 20 bis 60-%ige, vorzugsweise 30 bis 58-%ige Dispersion in Wasser und gegebenenfalls Lösungsmittel vorliegt.

### Beispiele

Der NCO-Gehalt wurde jeweils gemäß DIN 53185 titrimetrisch verfolgt.

Die OH-Zahl (Hydroxylzahl) wurde gemäß DIN 53240 bestimmt: Titration mit 0,1 mol/l meth. KOH-Lösung nach kalter Acetylierung mit Essigsäureanhydrid unter Katalyse von Dimethylaminopyridin.

Der Feststoffgehalt der Polyurethandispersion wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

Die Auslaufzeit wurde gemäß DIN 53211 mit Hilfe des 4 mm DIN-Bechers bestimmt.

Raumtemperatur bedeutet 23 °C.

Wenn nicht anderweitig vermerkt, handelt es sich bei Prozent-Angaben in den Beispielen um Gewichts-%.

Folgende Handelsprodukte wurden in den Beispielen eingesetzt:
BYK 346: Lösung eines polyethermodifizierten Siloxans (Fa. Byk.Chemie)
BYK 333: Lösung eines polyethermodifizierten Siloxans (Fa. Byk.Chemie)
Esacure® One: Photoinitiator (Fa. Lamberti)
Tinuvin® 400 DW: Lichtstabilisator (Fa. BASF SE)
Bindzil® CC401: Nanopartikel (Fa. Hedinger GmbH & Co. KG)
Borchi® Gel 0625: Nicht-ionischer Verdicker auf Basis von Polyurethan für wässrige Beschichtungsmittel (Fa. OMG Borchers GmbH)
Borchi® Kat 24: hochreaktiver zinnfreier Katalysator auf Metallcarboxylatbasis (Fa. OMG Borchers GmbH)
Ebecryl® 600: Bisphenol-A-diglycidyldiacrylats (Epoxyacrylat der Firma Allnex Belgium SA mit einer OH-Zahl von 250 bis 260mg KOH/g bestimmt gemäß DIN53240)
Photomer® 4399: Dipentaerythriolpentaacrylat (Fa. BASF SE)
Desmophen® C 2200: lineares hydroxyl-terminiertes aplihatisches Polycarbonat Diol mit einem durchschnittlichen Molekulargewicht von etwa 2000 g/mol (Fa. Covestro Deutschland AG)
Desmophen® C 2100: lineares hydroxyl-terminiertes aplihatisches Polycarbonat Diol mit einem durchschnittlichen Molekulargewicht von etwa 1000 g/mol (Fa. Covestro Deutschland AG)
Desmophen® PE170HN: lineares hydroxyl-terminiertes aplihatisches Polyester Diol mit einem durchschnittlichen Molekulargewicht von etwa 1700 g/mol (Fa. Covestro Deutschland AG)
Laromer® PE44F: Polyesteracrylat (Fa. BASF SE)
Desmodur® W: 4,4'-Diisocyanato-dicyclohexylmethan (Fa. Covestro Deutschland AG)
Desmodur® I: Isophorondiisocyanat (Fa. Covestro Deutschland AG)
Desmodur® H: Hexamethylendiisocyanat (Fa. Covestro Deutschland AG)
Miramer® M600: Reaktivverdünner (Fa. Miwon Speciality Chemical Co. Ltd.)
Bayhydrol® XP2648: aliphatische, polycarbonathaltige anionische Polyurethandispersion, lösungsmittelfrei (Fa. Covestro Deutschland AG)

### Herstellung der wässrigen strahlenhärtbaren Polyurethan(meth)acrylate

### PUR-Dispersion 1: Herstellung eines strahlenhärtbaren, wässrigen Polyurethan(meth)acrylats a)

220,28g des Ebecryl® 600 (Komponente A), 550,70g Desmophen®C 2200, (Komponente C), 29,54g Dimethylolpropionsäure (Komponente E), 293,81g, Desmodur® W, (Komponente F), 0,32g Borchi®Kat 24 und 0,06g Dibutylphosphat wurden in 857g Aceton gelöst und bis zu einem NCO-Gehalt von 1,18 Gew.-% bei 60 °C unter Rühren umgesetzt. Daraufhin wurden 7,09g Teile Ethylendiamin in 31,5g Aceton der Dispersion unter Rühren zugesetzt. Anschließend erfolgte die Neutralisation durch Unterrühren von 20,06g Triethylamin. Die klare Lösung wurde unter Rühren in 1589,2g de-ionisiertes Wasser eingetragen. Im Anschluss wurde das Aceton unter leichtem Vakuum aus der Dispersion abdestilliert. Es wurde eine strahlenhärtbare, wässrige Polyurethandispersion mit einem Feststoffgehalt von 43,1 Gew.-%, einer Auslaufzeit von 18 sec, einer mittleren Teilchengröße von 84 nm und einem pH-Wert von 7,9 erhalten.

### PUR-Dispersion 2: Herstellung eines strahlenhärtbaren, wässrigen Polyurethan(meth)acrylats a)

208,8g des Ebecryl® 600 (Komponente A), 522,1g Desmophen®C 2200, (Komponente C), 28,0g Dimethylolpropionsäure (Komponente E), 278,6g, Desmodur® W, (Komponente F), 0,30g Borchi®Kat 24 und 0,06g Dibutylphosphat wurden in 813g Aceton gelöst und bis zu einem NCO-Gehalt von 1,07 Gew.-% bei 60 °C unter Rühren umgesetzt. Daraufhin wurden 6,72g Teile Ethylendiamin in 29,8g Aceton der Dispersion unter Rühren zugesetzt. Anschließend erfolgte die Zugabe von 186,82g Miramer® M600 (Komponente H) und die Neutralisation durch Unterrühren von 19,0g Triethylamin. Die klare Lösung wurde unter Rühren in 1506,7g de-ionisiertes Wasser eingetragen. Im Anschluss wurde das Aceton unter leichtem Vakuum aus der Dispersion abdestilliert. Es wurde eine strahlenhärtbare, wässrige Polyurethandispersion mit einem Feststoffgehalt von 48,1 Gew.-%, einer Auslaufzeit von 16 sec, einer mittleren Teilchengröße von 136 nm und einem pH-Wert von 7,9 erhalten.

### PUR-Dispersion 3: Herstellung eines strahlenhärtbaren, wässrigen Polyurethan(meth)acrylats a) (nicht erfindungsgemäß)

95,56g des Ebecryl® 600 (Komponente A), 238,90g Desmophen®C 2200, (Komponente C), 12,81g Dimethylolpropionsäure (Komponente E), 107,59g, Isophorondiisocyanat, (Komponente F), 0,14g Borchi®Kat 24 und 0,03g Dibutylphosphat wurden in 365g Aceton gelöst und bis zu einem NCO-Gehalt von 1,30 Gew.-% bei 60 °C unter Rühren umgesetzt. Daraufhin wurden 3,08g Ethylendiamin in 13,65g Aceton der Dispersion unter Rühren zugesetzt. Anschließend erfolgte die Zugabe von 85,48g Miramer® M600 (Komponente H) und die Neutralisation durch Unterrühren von 19,0g Triethylamin. Die klare Lösung wurde unter Rühren in 668,91g de-ionisiertes Wasser eingetragen. Im Anschluss wurde das Aceton unter leichtem Vakuum aus der Dispersion abdestilliert. Es wurde eine strahlenhärtbare, wässrige Polyurethandispersion mit einem Feststoffgehalt von 44,8 Gew.-%, einer Auslaufzeit von 44 sec, einer mittleren Teilchengröße von 246 nm und einem pH-Wert von 8,7 erhalten.

### PUR-Dispersion 4: Herstellung eines strahlenhärtbaren, wässrigen Polyurethan(meth)acrylats a) (nicht erfindungsgemäß)

223,3g Laromer® PE44F (Komponente B), 173,7g Desmophen C® 2200 (Komponente C), 14,75g Dimethylolpropionsäure (Komponente E), 108,1g Desmodur® W (Komponente F), 0,12g Borchi® Kat 24und 0,02g Dibutylphosphat wurden in 387,4g Aceton gelöst und bis zu einem NCO-Gehalt von 0,7 Gew.-% bei 60 °C unter Rühren umgesetzt. Anschließend erfolgte bei 45°C zunächst die Kettenverlängerung durch Einrühren von 2,78g Ethylendiamin (gelöst in 11,6g Aceton), die Zugabe von 72,5g Miramer® M600 (Komponente H) und dann die Neutralisation durch Unterrühren von 10,0g Triethylamin. In die klare Lösung wurde unter Rühren 695g de-ionisiertes Wasser eingetragen. Im Anschluss wurde das Aceton unter leichtem Vakuum aus der Dispersion abdestilliert. Es wurde eine strahlenhärtbare, wässrige Polyurethandispersion mit einem Feststoffgehalt von 44,6 Gew.-%, einer Auslaufzeit von 14 sec, einer mittleren Teilchengröße von 267 nm und einem pH-Wert von 8,4 erhalten.

### PUR-Dispersion 5: Herstellung eines strahlenhärtbaren, wässrigen Polyurethan(meth)acrylats a) (nicht erfindungsgemäß, nach EP-A 1489120)

20,85g eines Polyesteracrylates mit einer OH-Zahl von 160 mgKOH/g (hergestellt aus 1mol Adipinsäure, 0,72mol Trimethylolpropan, 1,9mol 1,6-Hexandiol und 2 mol Acrylsäure), 220,6g Desmophen® C 2200 (Komponente C), 70,5g eines difunktionellen Polypropylenglykols mit einer OH-Zahl von 56,0 mg KOH/g, 12,21g eines monofunktionellen Polyalkylenoxides mit einem Molekulargewicht (Mn) von 2250g/mol (hergestellt aus Diethylenglykolmonobutylether, Propylenoxid und Ethylenoxid (in einem Gewichtsverhätnis von Ethylenoxid zu Propylenoxid von etwa 5,4:1) (Komponente E), 54,7g Desmodur® H (Komponente F), 0,13g Dibutylzinndilaurat wurden in 633g Aceton gelöst und bis zu einem NCO-Gehalt von 1,86 Gew.-% bei 60 °C unter Rühren umgesetzt. Anschließend erfolgte bei einer Temperatur von 45°C die Kettenverlängerung durch Zugabe einer Lösung von 20,23g des Natriumsalzes der 2-Aminoethyl-2-aminoethansulfonsäure (als 45%ige Lösung in Wasser), 1,82g Ethylendiamin und 0,9g Hydrazinmonohydrat in 89,5g Wasser. Es wurden dann weitere 475,6g Wasser zugegeben und das Aceton unter leichtem Vakuum aus der Dispersion abdestilliert. Es wurde eine strahlenhärtbare, wässrige Polyurethandispersion mit einem Feststoffgehalt von 42,6 Gew.-%, einer Auslaufzeit von 93 sec, einer mittleren Teilchengröße von 134 nm und einem pH-Wert von 7,8 erhalten.

### PUR-Dispersion 6: Herstellung eines strahlenhärtbaren, wässrigen Polyurethan(meth)acrylats a) (nicht erfindungsgemäß; nach Beispiel 3 WO2006/101433)

29,9g Hydroxyethylacrylat, Komponente B), 224,9g Desmophen C® 2100 (Komponente C), 17,3g Trimethylolpropan (Komponente D), 25,9g Dimethylolpropionsäure (Komponente E), 199,7g Desmodur® I (Komponente F), 0,30g Dibutlyzinndilaurat und 25,4g N-Methylpyrrolidon wurden bis zu einem NCO-Gehalt von 2,4 Gew.-% bei 65 °C unter Rühren umgesetzt. Anschließend wurde auf 40°C abgekühlt, und es erfolgte die Neutralisation durch Zugabe und Unterrühren von 17,6g Triethylamin. Zu der klaren Lösung wurden unter Rühren 1034,7g de-ionisiertes Wasser eingetragen. Daraufhin wurden 17,3g Teile Ethylendiamin der Dispersion unter Rühren zugesetzt. Es wurde eine strahlenhärtbare, wässrige Polyurethandispersion mit einem Feststoffgehalt von 35,7 Gew.-%, einer Auslaufzeit von 13 sec, einer mittleren Teilchengröße von 69 nm und einem pH-Wert von 8,8 erhalten.

### PUR-Dispersion 7:

### kommerziell erhältliches Bayhydrol® XP2648

### PUR-Dispersion 8: Herstellung eines strahlenhärtbaren Polyurethan(meth)acrylats c):

In einem Reaktionsgefäß mit Rührer, Innenthermometer und Gaseinleitung (Luftstrom 1 1/h) wurden 471,9 Teile des Polyesteracrylats Laromer® PE 44 F (Komponente B-1) 8,22 Teile Trimethylolpropan (Komponente D), 27,3 Teile Dimethylolpropionsäure (Komponente E-1), 199,7 Teile Desmodur® W (Komponente F-1), und 0,6 Teile Dibutylzinndilaurat in 220 Teilen Aceton gelöst und bis zu einem NCO-Gehalt von 1,47 Gewichts-% bei 60 °C unter Rühren umgesetzt. Der so erhaltenen Präpolymer-Lösung wurden 115,0 Teile des Photomer® 4399 (Komponente H-1) zugesetzt und untergerührt.

Anschließend wurde auf 40 °C abgekühlt und es wurden 19,53 g Triethylamin zugegeben. Nach 5 min Rühren bei 40 °C wurde die Reaktionsmischung unter schnellem Rühren in 1200 g Wasser von 20 °C gegossen. Anschließend wurden 9,32 g Ethylendiamin (Komponente G-1) in 30,0 g Wasser zugefügt.

Nach 30 min Nachrühren ohne Heizen oder Kühlen wurde das Produkt im Vakuum (50 mbar, max. 50 °C) destilliert, bis ein Festkörper von 40 ± 1 Gewichts-% erreicht wurde. Die Dispersion hatte einen pH-Wert von 8,7 und eine mittlere Teilchengröße von 130 nm. Die Auslaufzeit betrug 18 s.

### PUR-Dispersion 9: Herstellung eines strahlenhärtbaren, wässrigen Polyurethan(meth)acrylats a) (nicht erfindungsgemäß)

112,0g des Ebecryl® 600 (Komponente A), 238,0g Desmophen® PE170HN (nichterfindungsgemäßer Ersatz für Komponente C), 15,0g Dimethylolpropionsäure (Komponente E), 149,4g, Desmodur® W, (Komponente F) und 0,2g Borchi®Kat 24 wurden in 280g Aceton gelöst und bis zu einem NCO-Gehalt von 1,2 Gew.-% bei 60 °C unter Rühren umgesetzt. Daraufhin wurden 3,6g Teile Ethylendiamin in 16,0g Aceton der Dispersion unter Rühren zugesetzt. Anschließend erfolgte die Neutralisation durch Unterrühren von 10,7g Triethylamin. Die klare Lösung wurde unter Rühren in 720,0g de-ionisiertes Wasser eingetragen. Im Anschluss wurde das Aceton unter leichtem Vakuum aus der Dispersion abdestilliert. Es wurde eine strahlenhärtbare, wässrige Polyurethandispersion mit einem Feststoffgehalt von 43,5 Gew.-%, einer Auslaufzeit von 21 sec, einer mittleren Teilchengröße von 100 nm und einem pH-Wert von 8,5 erhalten.

### Herstellung des wässrigen strahlenhärtbaren Beschichtungsmittels:

Gemäß der Mengenangaben in Tabelle 1 wurden die Polymer-Dispersionen 1-7 hergestellt, indem Diacetonalkohol und 2-Methoxypropanol vorgelegt wurden, dann unter Rühren Esacure® One hinzugefügt wurde und dann bei 23 °C bis zur vollständigen Lösung von Esacure® One gerührt wurde. Im Anschluss wurde die Lösung filtriert unter Verwendung eines 5 µm Beutelfilters.

Die PUR-Dispersionen wurden vorgelegt und für 5 min bei 500 U/min gerührt. Unter starken Rühren (1000 U/min) wurde innerhalb von 5 min. die zuvor hergestellte Lösung des Esacure® One zugegeben.

Die Additive Tinuvin® 400 DW, Byk® 333 und Byk® 346 wurden nacheinander unter Rühren (500 U/min) zugegeben mit jeweils 5 min Nachrührzeit. Es wurde der pH-Wert unter Zugabe von N,N-Dimethylethylamin unter Rühren (500 U/min) auf pH 8,0 bis 8,5 eingestellt. Unter weiterem Rühren (500 U/min) wurde innerhalb von 10 min Bindzil® CC 401 zugegeben und weitere 20 min nachgerührt. Falls der pH-Wert nach dieser Nachrührzeit < 8 sein sollte, wurde dieser durch weitere Zugabe von N,N-Dimethylethylamin wieder auf pH 8,0 bis 8,5 eingestellt. Borchi® Gel 0625 wurde mit dem Dissolver unter starken Rühren (1000 U/min) eindispergiert und weitere 30 min bei 1000 U/min gerührt. Zum Schluss wurde die Dispersion über einen 10 µm Beutelfilter filtriert.

### Applikation der Polymer-Dispersionen auf Kunststofffolien

Die Polymer-Dispersionen 1-7 gemäß Tabelle 1 wurden mit einem handelsüblichen Rakel (Sollnassschichtdicke 100 µm) einseitig auf Polycarbonat-Kunststofffolien (Makrofol® DE1-1, Foliendicke 250 µm und 375 µm, Bogengröße DIN A4) aufgetragen. Nach einer Ablüftphase von 10 min bei 20 °C bis 25 °C wurden die lackierten Folien für 10 min bei 110 °C in einem Umluftofen getrocknet beziehungsweise vorvernetzt. Die derart hergestellten Lackfolien waren daraufhin an dieser Stelle in der Prozesskette grifffest.

### UV-Härtung der beschichteten Kunststofffolien

Um die Eigenschaften der vorher beschriebenen beschichteten Folien bewerten zu können, muss die Beschichtung UV-gehärtet werden. Die UV-Härtung der Beschichtung wurde mit einer Quecksilberdampf-Hochdrucklampe vom Type evo 7 dr (ssr engineering GmbH, Lippstadt, Deutschland) ausgeführt. Die Anlage ist ausgestattet mit dichroitischem Reflektoren und Quarzscheiben und hat eine spezifische Leistung von 160 W/cm. Es wurde eine UV-Dosis von 2,0 J/cm² und eine Intensität von 1,4 W/cm² appliziert. Die Oberflächentemperatur sollte > 70 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

### Prüfung der Hydrolysebeständigkeit

Die Hydrolysebeständigkeit der beschichteten und ausgehärteten Folien wurde in einer Klimakammer geprüft. Angelehnt an die TL226 der Volkswagen AG wurden die Folien senkrecht stehend in der Dampfphase über einem Wasserreservoir gelagert. Die Temperatur wurde konstant bei 90°C gehalten und die relative Luftfeuchte bei konstant 90 %. Die Lagerzeit variierte in einem breiten Rahmen und ist bei den ermittelten Ergebnissen in den Tabellen jeweils angegeben. Gefordert ist minimal ein schadensfreies Ergebnis nach 72 Stunden.

Die Bewertung der Folien erfolgte nach Entnahme aus der Klimakammer sofort nach dem Abwischen mit einem weichen Tuch. Es wurde das visuelle Erscheinungsbild der Lacke bewertet. Die Oberfläche der Lacke sollte sich möglichst nicht verändert haben.

Der Lack wurde mittels Gitterschnitt auf Haftung geprüft. Hierzu wurde mit einem Schneidegerät ein Gitter in den Lack geschnitten, so dass die Schnitte bis in die Grenzschicht zur Basisfolie reichten. Es erfolgten 6 Schnitte im Abstand von je 1 mm parallel zueinander. Sodann weitere 6 Schnitte senkrecht zu den ersten, so dass ein Kästchenmuster aus 25 Kästchen mit jeweils 1 mm Kantenlänge entstand. Die Schnittfläche wurde mit einer Bürste von Schneidstaub gereinigt. Auf die so verletzte Lackoberfläche wurde ein Gewebeklebeband (3M, Scotch) aufgeklebt und fest auf die Oberfläche gerieben, so dass ein Ende des Klebebands zum Greifen mit einer Hand frei blieb. Danach wurde das Klebeband am freien Ende ruckartig von der Oberfläche abgerissen und die Qualität der Schnittkanten in obigen Kästchen bewertet. Idealerweise findet man nur gerade Schnittkanten, ohne jede Abplatzung (= GT0). Zum Bestehen des Tests dürfen maximal 5 % der Lackoberfläche an den Schnittkanten abgelöst worden sein (= GT1). Kennwerte größer GT1 bedeuten, dass der Test nicht bestanden wurde, d.h. es wurden Lackablösungen auf mehr als 5% der Fläche gefunden.

**Tabelle 1: Lackeigenschaften und Zusammensetzung der Polymer-Dispersionen**

| **Dispersion** | **1** | **2** | **3 (V)** | **4 (V)** | **5 (V)** | **6 (V)** | **7 (V)** | **8 (V)** |
|---|---|---|---|---|---|---|---|---|
| PUR-8 | 54,6 | 54,6 | 54,6 | 54,6 | 54,6 | 54,6 | 54,6 | 54,6 |
| PUR-1 | 8,7 | | | | | | | |
| PUR-2 | | 8,7 | | | | | | |
| PUR-3 | | | 8,7 | | | | | |
| PUR-4 | | | | 8,7 | | | | |
| PUR-5 | | | | | 8,7 | | | |
| PUR-6 | | | | | | 8,7 | | |
| PUR-7 | | | | | | | 8,7 | |
| PUR-9 | | | | | | | | 8,7 |
| Esacure® One | 0,7 | 0,7 | 0,7 | 0,7 | 0,7 | 0,7 | 0,7 | 0,7 |
| Diacetonalkohol | 4,9 | 4,9 | 4,9 | 4,9 | 4,9 | 4,9 | 4,9 | 4,9 |
| 2-Methoxypropanol | 4,9 | 4,9 | 4,9 | 4,9 | 4,9 | 4,9 | 4,9 | 4,9 |
| Tinuvin® 400 DW | 2,2 | 2,2 | 2,2 | 2,2 | 2,2 | 2,2 | 2,2 | 2,2 |
| BYK® 333 | 0,2 | 0,2 | 0,2 | 0,2 | 0,2 | 0,2 | 0,2 | 0,2 |
| BYK®346 | 0,3 | 0,3 | 0,3 | 0,3 | 0,3 | 0,3 | 0,3 | 0,3 |
| N,N-Dimethylethylamin | 0,2 | 0,2 | 0,2 | 0,2 | 0,2 | 0,2 | 0,2 | 0,2 |
| Bindzil® CC 401 | 23,0 | 23,0 | 23,0 | 23,0 | 23,0 | 23,0 | 23,0 | 23,0 |
| Borchi® Gel 0625 | 0,3 | 0,3 | 0,3 | 0,3 | 0,3 | 0,3 | 0,3 | 0,3 |

| **Hydrolysebeständigkeit** | | | | | | | | |
|---|---|---|---|---|---|---|---|---|
| Haftung vor Hydrolyse | GT0 | GT0 | GT0 | GT0 | GT0 | GT0 | GT0 | GT0 |
| Hydrolyse 90°C, 90% rel. Feuchte | | | | | | | | |
| nach 72h | GT0 | GT0 | GT5 | GT5 | GT5 | GT5 | GT5 | GT5 |
| nach 96h | GT1 | GT0 | / | / | / | / | / | / |

| | | | | | | | | |
|---|---|---|---|---|---|---|---|---|
| Die Mengenangaben der Formulierung sind in Gew.-%. V: Vergleichsbeispiel | | | | | | | | |

Alle eingesetzten PUR-Dispersionen haben einen Festkörpergehalt von 40 Gew.-%.

Die Beispiele 1 bis 8 zeigen, dass nur unter Verwendung der PUR-Dispersionen 1 und 2 eine verbesserte Hydrolysebeständigkeit (mind. 72 h) in der resultierenden strahlenhärtbaren Beschichtung einer Kunststofffolie beobachtet wurde.

Der Einfluss des Anteils an erfindungsgemäßen Polyurethan(meth)acrylat a) in der Polymer-Dispersion auf die Hydrolysebeständigkeit wird in Tabelle 2 gezeigt.

**Tabelle 2: Einfluss des Gewichtsanteils der erfindungsgemäßen Dispersionen**

| **Dispersion** | **2** | **9 (V)** | **10** | **11** | **12** | **13** |
|---|---|---|---|---|---|---|
| PUR-8 | 54,6 | 58,3 | 53,3 | 43,3 | 33,3 | |
| PUR-2 | 8,7 | 5,0 | 10,0 | 20,0 | 30,0 | 63,3 |
| Esacure® One | 0,7 | 0,7 | 0,7 | 0,7 | 0,7 | 0,7 |
| Diacetonalkohol | 4,9 | 4,9 | 4,9 | 4,9 | 4,9 | 4,9 |
| 2-Methoxypropanol | 4,9 | 4,9 | 4,9 | 4,9 | 4,9 | 4,9 |
| Tinuvin® 400 DW | 2,2 | 2,2 | 2,2 | 2,2 | 2,2 | 2,2 |
| BYK® 333 | 0,2 | 0,2 | 0,2 | 0,2 | 0,2 | 0,2 |
| BYK®346 | 0,3 | 0,3 | 0,3 | 0,3 | 0,3 | 0,3 |
| N,N-Dimethylethylamin | 0,2 | 0,2 | 0,2 | 0,2 | 0,2 | 0,2 |
| Bindzil® CC 401 | 23,0 | 23,0 | 23,0 | 23,0 | 23,0 | 23,0 |
| Borchi® Gel 0625 | 0,3 | 0,3 | 0,3 | 0,3 | 0,3 | 0,3 |

| **Hydrolysebeständigkeit** | | | | | | |
|---|---|---|---|---|---|---|
| Haftung vor Hydrolyse | GT0 | GT0 | GT0 | GT0 | GT0 | GT0 |
| Hydrolyse 90°C, 90% rel. Feuchte | | | | | | |
| nach 24 h | GT0 | GT0 | GT0 | GT0 | GT0 | GT0 |
| nach 48 h | GT0 | GT0 | GT0 | GT0 | GT0 | GT0 |
| nach 72 h | GT0 | GT5 | GT0 | GT0 | GT0 | GT0 |
| nach 144 h | GT1 | GT5 | GT0 | GT0 | GT0 | n.b. |

| | | | | | | |
|---|---|---|---|---|---|---|
| Die Mengenangaben der Formulierung sind in Gew.-%. V: Vergleichsbeispiel n.b: nicht bestimmt | | | | | | |

Unter Verwendung der gemäß Tabelle 1 besonders vorteilhaft herausgearbeiteten PUR-2 wurde das Gewichtsverhältnis zwischen PUR-8 und PUR-2 variiert.

Es wird angesichts der Haftungsergebnisse in Tabelle 2 deutlich, dass eine Menge von 5 Gew.-% an PUR-2 in der Polymer-Dispersion nicht ausreicht, um die geforderte Mindest-Testdauer von 72 Stunden zu bestehen. Schon bei 72 Stunden tritt völliger Haftungsverlust ein.

Eine Zusatzmenge von 8,7 Gew.-% in der Polymer-Dispersion führt zu einem Verbund, der die geforderten Testbedingungen sicher übersteht und hierbei auch noch deutliche Reserven aufweist. Selbst nach 144 Stunden wird mit einem Kennwert GT1 der Test bestanden.

Ab einem Anteil von 10 Gew.-% an PUR-2 in der Polymer-Dispersion (Beispiele 10-13 der Tabelle 2) wird der Hydrolysetest selbst bis 144 Stunden sicher bestanden.

## Patentansprüche

1. Beschichtete Folie, umfassend eine Kunststofffolie und ein strahlungshärtbares wässriges Beschichtungsmittel, wobei das Beschichtungsmittel mindestens umfasst
a) ein Polyurethan(meth)acrylat, welches erhältlich ist aus der Reaktion einer Reaktionsmischung umfassend:
A) ein oder mehrere Polyepoxy(meth)acrylate mit einer OH-Zahl von 20 bis 300 mg KOH/g Substanz,
B) gegebenenfalls von A) verschiedene Verbindungen mit mindestens einer gegenüber Isocyanat reaktiven Gruppe und mindestens einer strahlenhärtbaren Doppelbindung,
C) ein oder mehrere lineare aliphatische Polycarbonatpolyole mit einer OH-Zahl von 25 bis 250 mg KOH/g Substanz,
D) gegebenenfalls eine oder mehrere Verbindungen, die mindestens zwei gegenüber Isocyanat reaktiven Gruppen und ein Molekulargewicht von weniger als 300g/mol besitzt,
E) eine oder mehrere Verbindungen mit mindestens einer gegenüber Isocyanat reaktiven Gruppe und zusätzlich mindestens einer hydrophilierend wirkenden Gruppe,
F) 4,4'-Diisocyanato-dicyclohexylmethan,
G) gegebenenfalls von A) bis F) verschiedene Verbindungen mit mindestens einer Aminfunktion,
H) gegebenenfalls Reaktivverdünner,
und
b) anorganische Nanopartikel mit einer mittleren Teilchengröße von ≥ 1 nm bis ≤ 200 nm.

2. Beschichtete Folie gemäß Anspruch 1, wobei das Beschichtungsmittel weiterhin folgende Komponenten umfasst
a) 8,0 - 65,0 Gew.-% Polyurethan(meth)acrylat,
b) 5,0 bis 50,0 Gew.-%, anorganische Nanopartikel,
c) 0 bis 57,0 Gew.-% Polyurethan(meth)acrylat, verschieden von a),
d) 0 bis 30,0 Gew.-% weitere Bindemittel oder Reaktivverdünner,
e) 0,1 bis 5,0 Gew.-% Photoinitiator,
f) 0 bis 15 Gew.-% Hilfs- und Zusatzstoffe,
g) 0 bis 10 Gew.-% Vernetzer,
wobei die Mengenangaben auf getrockneten Film bezogen sind und die Summe der einzelnen Komponenten 100 ergeben muss.

3. Beschichtete Folie gemäß Anspruch 1 oder 2, wobei c) in einer Menge von 10,0 bis 57,0 Gew.-% enthalten ist.

4. Beschichtete Folie gemäß Anspruch 1 bis 3, wobei der Kunststoff der Kunststofffolie ausgewählt ist aus der Gruppe bestehend aus thermoplastischem Polyurethan, Polymethylmethacrylat (PMMA) sowie modifizierte Varianten von PMMA, Polycarbonat (PC), Copolycarbonat, Acrylnitril-Styrol-Acrylester-Copolymerisaten (ASA), Acrylnitril-Butadien-Styrol-Copolymerisaten (ABS) und Polybutylenterephthalat/Polycarbonat.

5. Beschichtete Folie gemäß Anspruch 1 bis 4, wobei im Polyurethan(meth)acrylat a) A) ein Umsetzungsprodukt von Acrylsäure und/oder Methacrylsäure mit aromatischen oder aliphatischen Glycidylethern ist, und C) erhältlich ist durch Umesterung von Diphenylcarbonat, Dimethylcarbonat order Diethylcarbonat mit linearen, aliphatischen Diolen, ausgewählt aus der Gruppe bestehend aus 1,4-Butandiol, 1,5-Pentandiol, 1,6-Hexandiol.

6. Beschichtete Folie gemäß einem der Ansprüche 1 bis 5, wobei die Oberfläche der Nanopartikel in der Beschichtung durch die kovalente und/oder nicht kovalente Anbindung von weiteren Verbindungen modifiziert ist.

7. Beschichtete Folie gemäß einem der Ansprüche 1 bis 6, wobei die Nanopartikel ausgewählt sind aus der Gruppe bestehend aus Partikeln aus Siliziumoxid, Aluminiumoxid, Ceroxid, Zirkonoxid, Nioboxid und Titanoxid und eine mittlere Teilchengröße von ≥ 3 nm bis ≤ 50 nm aufweisen.

8. Verfahren zur Herstellung von beschichteten Folien gemäß Anspruch 1 bis 7, umfassend die Schritte:
1. Bereitstellen eines wässrigen strahlenhärtbaren Beschichtungsmittels, wobei das wässrige strahlenhärtbare Beschichtungsmittel mindestens ein Polyurethan(meth)acrylat a) umfasst, welches erhältlich ist aus der Reaktion einer Reaktionsmischung umfassend:
A) ein oder mehrere Polyepoxy(meth)acrylate mit einer OH-Zahl von 20 bis 300 mg KOH/g Substanz,
B) gegebenenfalls von A) verschiedene Verbindungen mit mindestens einer gegenüber Isocyanat reaktiven Gruppe und mindestens einer strahlenhärtbaren Doppelbindung,
C) ein oder mehrere lineare aliphatische Polycarbonatpolyole mit einer OH-Zahl von 25 bis 250 mg KOH/g Substanz,
D) gegebenenfalls eine oder mehrere Verbindungen, die mindestens zwei gegenüber Isocyanat reaktiven Gruppen und ein Molekulargewicht von weniger als 300g/mol besitzt,
E) eine oder mehrere Verbindungen mit mindestens einer gegenüber Isocyanat reaktiven Gruppe und zusätzlich mindestens einer hydrophilierend wirkenden Gruppe,
F) 4,4'-Diisocyanato-dicyclohexylmethan und
G) gegebenenfalls von A) bis F) verschiedene Verbindungen mit mindestens einer Aminfunktion,
H) gegebenenfalls Reaktivverdünner,
und wobei das wässrige Beschichtungsmittel weiterhin anorganische Nanopartikel b) mit einer mittleren Teilchengröße von ≥ 1 nm bis ≤ 200 nm umfasst;
2. Beschichten von mindestens einer Seite einer Kunststofffolie mit dem wässrigen Beschichtungsmittel aus Schritt1;
3. Trocknen der beschichteten Folie.

9. Verfahren gemäß Anspruch 8, wobei das wässrige Beschichtungsmittel aus Schritt 1 eine 20- 60-%ige Dispersion in Wasser und gegebenenfalls Lösemittel ist, und wobei die folgenden Komponenten bezogen auf den Festkörper folgenden Mengen umfassen:
a) 8,0 - 65,0 Gew.-% Polyurethan(meth)acrylat,
b) 5,0 bis 50,0 Gew.-%, anorganische Nanopartikel,
c) 0 bis 57 Gew.-% Polyurethan(meth)acylat, verschieden von a),
d) 0 bis 30 Gew.-% weitere Bindemittel oder Reaktivverdünner,
e) 0,1 bis 5,0 Gew.-% Photoinitiator,
f) 0 bis 15,0 Gew.-% Hilfs- und Zusatzstoffe,
g) 0 bis 10 Gew.-% Vernetzer,
wobei die Summe der einzelnen Komponenten 100 ergeben muss.

10. Verwendung von beschichteten Folien gemäß Anspruch 1 bis 7 zur Herstellung von Formkörpern.

11. Verfahren zur Herstellung von Formkörpern, umfassend die Schritte:
1. Bereitstellen einer beschichteten Folie gemäß Anspruch 1 bis 7,
2. optionales Bedrucken z.B. mittels Siebdruck auf der der Beschichtung abgewandten Seite der Folie,
3. Formen des Formkörpers mittels Thermoformen oder High-Pressure-Forming,
4. Härten der strahlungshärtbaren Beschichtung durch aktinische Strahlung, vorzugsweise UV-Strahlung.

12. Verfahren gemäß Anspruch 11, weiterhin umfassend den Schritt:
5. Auftragen eines Polymers auf die der ausgehärteten Schicht entgegengesetzten Seite der Folie.

13. Formkörper, herstellbar durch ein Verfahren gemäß Anspruch 11 und 12.

14. Wässriges Bindemittel, erhältlich ist aus der Reaktion einer Reaktionsmischung umfassend:
A) ein oder mehrere Polyepoxy(meth)acrylate mit einer OH-Zahl von 20 bis 300 mg KOH/g Substanz,
B) gegebenenfalls von A) verschiedene Verbindungen mit mindestens einer gegenüber Isocyanat reaktiven Gruppe und mindestens einer strahlenhärtbaren Doppelbindung,
C) ein oder mehrere lineare aliphatische Polycarbonatpolyole mit einer OH-Zahl von 25 bis 250 mg KOH/g Substanz,
D) gegebenenfalls eine oder mehrere Verbindungen, die mindestens zwei gegenüber Isocyanat reaktiven Gruppen und ein Molekulargewicht von weniger als 300g/mol besitzt,
E) eine oder mehrere Verbindungen mit mindestens einer gegenüber Isocyanat reaktiven Gruppe und zusätzlich mindestens einer hydrophilierend wirkenden Gruppe,
F) 4,4'-Diisocyanato-dicyclohexylmethan und
G) gegebenenfalls von A) bis F) verschiedene Verbindungen mit mindestens einer Aminfunktion.
H) gegebenenfalls Reaktivverdünner.

15. Beschichtungsmittel, umfassend
a) ein Polyurethan(meth)acrylat gemäß Anspruch 14,
b) anorganische Nanopartikel mit einer mittleren Teilchengröße von ≥ 1 nm bis ≤ 200 nm,
c) gegebenenfalls Polyurethan(meth)acylat, verschieden von a)
d) gegebenenfalls weitere Bindemittel oder Reaktivverdünner,
e) Photoinitiator,
f) gegebenenfalls Hilfs- und Zusatzstoffe,
g) gegebenenfalls Vernetzer,
wobei das Beschichtungsmittel als 20 bis 60-%ige Dispersion in Wasser und gegebenenfalls Lösemittel vorliegt.

## Claims

1. Coated film, comprising a plastic film and a radiation-curable aqueous coating material, wherein the coating material comprises at least
a) a polyurethane (meth)acrylate which can be obtained from the reaction of a reaction mixture comprising:
A) one or more polyepoxy (meth)acrylates with an OH number of 20 to 300 mg KOH/g of substance,
B) where applicable, different compounds from A) with at least one group reactive to isocyanate and at least one radiation-curable double bond,
C) one or more linear aliphatic polycarbonate polyols with an OH number of 25 to 250 mg KOH/g of substance,
D) where applicable, one or more compounds having at least two groups reactive to isocyanate and a molecular weight of less than 300g/mol,
E) one or more compounds with at least one group reactive to isocyanate and additionally at least one group with hydrophilic action,
F) dicyclohexylmethane 4,4'-diisocyanate,
G) where applicable, different compounds from A) to F) with at least one amine function,
H) where applicable, reactive diluents,
and
b) inorganic nanoparticles with a mean particle size from ≥ 1 nm to ≤ 200 nm.

2. Coated film according to claim 1, wherein the coating material further comprises the following
a) 8.0 - 65.0 % of w/w polyurethane (meth)acrylate,
b) 5.0 to 50.0 % w/w of inorganic nanoparticles,
c) 0 to 57.0 % w/w of polyurethane (meth)acrylate, different from a),
d) 0 to 30.0 % w/w of other binders or reactive diluents,
e) 0.1 to 5.0 % w/w of photoinitiators,
f) 0 to 15 % w/w of auxiliary and additional substances,
g) 0 to 10 % w/w of cross-linking agents,
wherein the quantity data refer to dried film and the sum of the individual components must add up to 100.

3. Coated film according to claim 1 or 2, wherein c) is contained in a quantity of 10.0 to 57.0 % w/w.

4. Coated film according to claims 1 to 3, wherein the plastic for the plastic film is selected from the group consisting of thermoplastic polyurethane, polymethylmethacrylate (PMMA) and modified variants of PMMA, polycarbonate (PC), copolycarbonate, acrylonitrile-styrene-acrylic ester-copolymers (ASA), acrylonitrile-butadiene-styrene copolymers (ABS) and polybutylene terephthalate/polycarbonate.

5. Coated film according to claims 1 to 4, wherein in the polyurethane (meth)acrylate a) A) is a reaction product from acrylic acid and/or methacrylic acid with aromatic or aliphatic glycidyl ethers, and C) is obtainable by transesterification of diphenyl carbonate, dimethyl carbonate or diethyl carbonate with linear, aliphatic diols, selected from the group consisting of 1,4-butanediol, 1,5-pentanediol, 1,6-hexanediol.

6. Coated film according to any one of claims 1 to 5, wherein the surface of the nanoparticles in the coating is modified by the covalent and/or noncovalent linking of other compounds.

7. Coated film according to any one of claims 1 to 6, wherein the nanoparticles are selected from the group consisting of particles of silicon oxide, aluminium oxide, cerium oxide, zirconium oxide, niobium oxide and titanium oxide and have a mean particle size from ≥ 3 nm to ≤ 50 nm.

8. Method for producing coated films according to claims 1 to 7, comprising the steps:
1. Preparation of an aqueous radiation-curable coating material, wherein the aqueous radiation-curable coating material comprises at least one polyurethane (meth)acrylate a), obtainable from the reaction of a reaction mixture comprising:
A) one or more polyepoxy (meth)acrylates with an OH number of 20 to 300 mg KOH/g of substance,
B) where applicable, different compounds from A) with at least one group reactive to isocyanate and at least one radiation-curable double bond,
C) one or more linear aliphatic polycarbonate polyols with an OH number of 25 to 250 mg KOH/g of substance,
D) where applicable, one or more compounds having at least two groups reactive to isocyanate and a molecular weight of less than 300g/mol,
E) one or more compounds with at least one group reactive to isocyanate and additionally at least one group with hydrophilic action,
F) dicyclohexylmethane 4,4'-diisocyanate and
G) where applicable, different compounds from A) to F) with at least one amine function,
H) where applicable, reactive diluents,
and wherein the aqueous coating material furthermore comprises inorganic nanoparticles b) with a mean particle size from ≥ 1 nm to ≤ 200 nm;
2. Coating at least a side of a plastic film with the aqueous coating material from step 1;
3. Drying the coated film.

9. Method according to claim 8, wherein the aqueous coating material from step 1
is a 20 - 60 % dispersion in water and, where applicable, solvent, and wherein the following components, relative to the solid bodies, comprise the following quantities:
a) 8.0 - 65.0 % w/w of polyurethane (meth)acrylate,
b) 5.0 to 50.0 % w/w of inorganic nanoparticles,
c) 0 to 57 % w/w of polyurethane(meth)acrylate, different from a),
d) 0 to 30 % w/w of other binders or reactive diluents,
e) 0.1 to 5.0 % w/w of photoinitiators,
f) 0 to 15.0 % w/w of auxiliary and additional substances,
g) 0 to 10 % w/w of cross-linking agents,
wherein the sum of the individual components must add up to 100.

10. Use of coated films according to claims 1 to 7 for producing mouldings.

11. Method for producing mouldings, comprising the steps:
1. Preparation of a coated film according to claims 1 to 7,
2. Optional printing, such as by screen printing, on the side of the film opposite the coating,
3. Forming of the moulding by thermoforming or high pressure forming,
4. Curing the radiation-curable coating by actinic radiation, preferably UV radiation.

12. Method according to claim 11, further comprising the step:
5. Application of a polymer to the side of the film opposite the cured layer.

13. Moulding, producible by a method according to claims 11 and 12.

14. Aqueous binder, obtainable from the reaction of a reaction mixture comprising:
A) one or more polyepoxy (meth)acrylates with an OH number of 20 to 300 mg KOH/g of substance,
B) where applicable, different compounds from A) with at least one group reactive to isocyanate and at least one radiation-curable double bond,
C) one or more linear aliphatic polycarbonate polyols with an OH number of 25 to 250 mg KOH/g of substance,
D) where applicable, one or more compounds having at least two groups reactive to isocyanate and a molecular weight of less than 300 g/mol,
E) one or more compounds with at least one group reactive to isocyanate and additionally at least one group with hydrophilic action,
F) dicyclohexylmethane 4,4'-diisocyanate and
G) where applicable, different compounds from A) to F) with at least one amine function.
H) where applicable, reactive diluents.

15. Coating material, comprising
a) a polyurethane (meth)acrylate according to claim 14,
b) inorganic nanoparticles with a mean particle size from ≥ 1 nm to ≤ 200 nm,
c) where applicable, polyurethane (meth)acrylate, different from a),
d) where applicable, other binders or reactive diluents,
e) photoinitiators,
f) where applicable, auxiliary and additional substances,
g) where applicable, cross-linking agents,
wherein the coating material is present as a 20 to 60 % dispersion in water and, where applicable, solvent.

## Revendications

1. Film revêtu, comprenant un film en matière plastique et un agent de revêtement aqueux durcissable par rayonnement, l'agent de revêtement comprenant au moins :
a) un poly(méth)acrylate d'uréthane, qui peut être obtenu par la réaction d'un mélange réactionnel comprenant :
A) un ou plusieurs polyépoxy(méth)acrylates ayant un indice OH de 20 à 300 mg de KOH/g de substance,
B) éventuellement des composés différents de A), contenant au moins un groupe réactif avec les isocyanates et au moins une double liaison durcissable par rayonnement,
C) un ou plusieurs polycarbonate-polyols aliphatiques linéaires ayant un indice OH de 25 à 250 mg de KOH/g de substance,
D) éventuellement un ou plusieurs composés qui comprennent au moins deux groupes réactifs avec les isocyanates et présentent un poids moléculaire de moins de 300 g/mol,
E) un ou plusieurs composés contenant au moins un groupe réactif avec les isocyanates et en outre au moins un groupe à activité hydrophile,
F) du 4,4'-diisocyanato-dicyclohexylméthane,
G) éventuellement des composés différents de A) à F) contenant au moins une fonction amino,
H) éventuellement des diluants réactifs,
et
b) des nanoparticules inorganiques ayant une taille de particule moyenne de ≥ 1 nm à ≤ 200 nm.

2. Film revêtu selon la revendication 1, dans lequel l'agent de revêtement comprend en outre les composants suivants :
a) 8,0 à 65,0 % en poids de poly(méth)acrylate d'uréthane,
b) 5,0 à 50,0 % en poids de nanoparticules inorganiques,
c) 0 à 57,0 % en poids d'un poly(méth)acrylate d'uréthane différent de a),
d) 0 à 30,0 % en poids d'autres liants ou diluants réactifs,
e) 0,1 à 5,0 % en poids de photoinitiateur,
f) 0 à 15 % en poids d'adjuvants et d'additifs,
g) 0 à 10 % en poids d'agents de réticulation,
les données de quantités se rapportant au film sec et la somme des composants individuels devant être de 100.

3. Film revêtu selon la revendication 1 ou 2, dans lequel c) est contenu en une quantité de 10,0 à 57,0 % en poids.

4. Film revêtu selon les revendications 1 à 3, dans lequel la matière plastique du film en matière plastique est choisie dans le groupe constitué par le polyuréthane thermoplastique, le polyméthacrylate de méthyle (PMMA), ainsi que les variantes modifiées de PMMA, le polycarbonate (PC), le copolycarbonate, les copolymères d'acrylonitrile-styrène-ester acrylique (ASA), les copolymères d'acrylonitrile-butadiène-styrène (ABS) et le polytéréphtalate de butylène/polycarbonate.

5. Film revêtu selon les revendications 1 à 4, dans lequel, dans le poly(méth)acrylate d'uréthane a), A) est un produit de réaction d'acide acrylique et/ou d'acide méthacrylique avec des éthers glycidyliques aromatiques ou aliphatiques, et C) peut être obtenu par transestérification de carbonate de diphényle, de carbonate de diméthyle ou de carbonate de diéthyle avec des diols aliphatiques linéaires, choisis dans le groupe constitué par le 1,4-butanediol, le 1,5-pentanediol, le 1,6-hexanediol.

6. Film revêtu selon l'une quelconque des revendications 1 à 5, dans lequel la surface des nanoparticules dans le revêtement est modifiée par la liaison covalente et/ou non covalente de composés supplémentaires.

7. Film revêtu selon l'une quelconque des revendications 1 à 6, dans lequel les nanoparticules sont choisies dans le groupe constitué par les particules d'oxyde de silicium, d'oxyde d'aluminium, d'oxyde de cérium, d'oxyde de zirconium, d'oxyde de niobium et d'oxyde de titane, et présentent une taille de particule moyenne de ≥ 3 nm à ≤ 50 nm.

8. Procédé de fabrication de films revêtus selon les revendications 1 à 7, comprenant les étapes suivantes :
1. la préparation d'un agent de revêtement aqueux durcissable par rayonnement, l'agent de revêtement aqueux durcissable par rayonnement comprenant au moins un poly(méth)acrylate d'uréthane a), qui peut être obtenu par la réaction d'un mélange réactionnel comprenant :
A) un ou plusieurs polyépoxy(méth)acrylates ayant un indice OH de 20 à 300 mg de KOH/g de substance,
B) éventuellement des composés différents de A), contenant au moins un groupe réactif avec les isocyanates et au moins une double liaison durcissable par rayonnement,
C) un ou plusieurs polycarbonate-polyols aliphatiques linéaires ayant un indice OH de 25 à 250 mg de KOH/g de substance,
D) éventuellement un ou plusieurs composés qui comprennent au moins deux groupes réactifs avec les isocyanates et présentent un poids moléculaire de moins de 300 g/mol,
E) un ou plusieurs composés contenant au moins un groupe réactif avec les isocyanates et en outre au moins un groupe à activité hydrophile,
F) du 4,4'-diisocyanato-dicyclohexylméthane, et
G) éventuellement des composés différents de A) à F) contenant au moins une fonction amino,
H) éventuellement des diluants réactifs,
et l'agent de revêtement aqueux comprenant également des nanoparticules inorganiques b) ayant une taille de particule moyenne de ≥ 1 nm à ≤ 200 nm ;
2. le revêtement d'au moins un côté d'un film en matière plastique avec l'agent de revêtement aqueux de l'étape 1 ;
3. le séchage du film revêtu.

9. Procédé selon la revendication 8, dans lequel l'agent de revêtement aqueux de l'étape 1 est une dispersion à 20 à 60 % dans de l'eau et éventuellement des solvants, et les composants suivants sont compris en les quantités suivantes, en termes de solides :
a) 8,0 à 65,0 % en poids de poly(méth)acrylate d'uréthane,
b) 5,0 à 50,0 % en poids de nanoparticules inorganiques,
c) 0 à 57 % en poids d'un poly(méth)acrylate d'uréthane différent de a),
d) 0 à 30 % en poids d'autres liants ou diluants réactifs,
e) 0,1 à 5,0 % en poids de photoinitiateur,
f) 0 à 15,0 % en poids d'adjuvants et d'additifs,
g) 0 à 10 % en poids d'agents de réticulation,
la somme des composants individuels devant être de 100.

10. Utilisation de films revêtus selon les revendications 1 à 7 pour la fabrication de corps moulés.

11. Procédé de fabrication de corps moulés, comprenant les étapes suivantes :
1. la préparation d'un film revêtu selon les revendications 1 à 7,
2. éventuellement l'impression, p. ex. par sérigraphie, sur le côté opposé au revêtement du film,
3. le façonnage du corps moulé par thermoformage ou façonnage sous pression élevée,
4. le durcissement du revêtement durcissable par rayonnement par un rayonnement actinique, de préférence un rayonnement UV.

12. Procédé selon la revendication 11, comprenant en outre l'étape suivante :
5. l'application d'un polymère sur le côté opposé à la couche durcie du film.

13. Corps moulé, pouvant être fabriqué par un procédé selon les revendications 11 et 12.

14. Liant aqueux, pouvant être obtenu par la réaction d'un mélange réactionnel comprenant :
A) un ou plusieurs polyépoxy(méth)acrylates ayant un indice OH de 20 à 300 mg de KOH/g de substance,
B) éventuellement des composés différents de A), contenant au moins un groupe réactif avec les isocyanates et au moins une double liaison durcissable par rayonnement,
C) un ou plusieurs polycarbonate-polyols aliphatiques linéaires ayant un indice OH de 25 à 250 mg de KOH/g de substance,
D) éventuellement un ou plusieurs composés qui comprennent au moins deux groupes réactifs avec les isocyanates et présentent un poids moléculaire de moins de 300 g/mol,
E) un ou plusieurs composés contenant au moins un groupe réactif avec les isocyanates et en outre au moins un groupe à activité hydrophile, et
F) du 4,4'-diisocyanato-dicyclohexylméthane,
G) éventuellement des composés différents de A) à F) contenant au moins une fonction amino,
H) éventuellement des diluants réactifs.

15. Agent de revêtement, comprenant :
a) un poly(méth)acrylate d'uréthane selon la revendication 14,
b) des nanoparticules inorganiques ayant une taille de particule moyenne de ≥ 1 nm à ≤ 200 nm,
c) éventuellement un poly(méth)acrylate d'uréthane différent de a),
d) éventuellement d'autres liants ou diluants réactifs,
e) un photoinitiateur,
f) éventuellement des adjuvants et additifs,
g) éventuellement des agents de réticulation,
l'agent de revêtement se présentant sous la forme d'une dispersion à 20 à 60 % dans de l'eau et éventuellement des solvants.
